# EUROPÄISCHE PATENTANMELDUNG

(11) **EP 4 019 476 A2**
(43) Veröffentlichungstag der Anmeldung: **29.06.2022**
(21) Anmeldenummer: 21217020.3
(22) Anmeldetag: 22.12.2021
(51) Int. Cl.: C02F 1/461, C02F 1/467, C02F 1/20, C02F 1/36, C02F 1/28, C02F 1/44, C02F 103/04

(54) **VERFAHREN ZUR HERSTELLUNG VON ELEKTROCHEMISCH MODIFIZIERTEM WASSER**

(30) Priorität: 23.12.2020 DE 102020007932
(71) Anmelder: Peter Ott Consulting, 66839 Schmelz (DE)
(72) Erfinder: Ott, Peter, 66839 Schmelz (DE)
(74) Vertreter: Bosch Jehle Patentanwaltsgesellschaft mbH

(57) **Zusammenfassung**

Es wird ein ultrareines Wasser sowie ein Verfahren zur Herstellung von elektrochemisch modifiziertem Wasser vorgeschlagen, wobei das Wasser eine elektrische Leitfähigkeit von kleiner als 0,1 µS/cm aufweist und im Wesentlichen frei von organischen Bestandteilen und von Gasen ist, und in dem durch autoprotolytische Vorgänge OH⁻-Ionen und H₃O⁺-Ionen ausgebildet werden. Das ultrareine Wasser weist einen OH⁻-Überschuss und einen pH-Wert von 7,5 bis 9,5 auf.

Weiterhin ist die Erfindung auf ein Verfahren zur Herstellung einer hochreinen Chloridsalz-Lösung aus dem ultrareinen Wasser mit dem OH⁻-Überschuss und dem pH-Wert von 7,5 bis 9,5, gerichtet.

Um Desinfektionslösungen von großer Haltbarkeit und Reproduzierbarkeit der Desinfektionswirkung zu erzielen, ist die Herstellung einer Desinfektionslösung aus der Chloridsalz-Lösung vorgesehen.

## Beschreibung

Die vorliegende Erfindung betrifft ein ultrareines, elektrochemisch modifiziertes Wasser, ein Verfahren zur Herstellung von ultrareinem, elektrochemisch modifiziertem Wasser, sowie die Verwendung dieses Wassers zur Herstellung von hochreinen Chloridsalz-Lösungen und die Verwendung dieser hochreinen Chloridsalz-Lösungen zur Herstellung von desinfizierenden Lösungen.

### WASSER

Wasser ist eine Grundvoraussetzung für das Leben und kommt in der Natur ubiquitär vor. Es existiert auf der Erdoberfläche und in der Atmosphäre in allen drei Aggregatzuständen, fest, flüssig und gasförmig. Pflanzen und Tiere bestehen zu 50 bis 80 % aus Wasser, im menschlichen Körper beträgt der Wasseranteil etwa 70 % des Gesamtgewichts. Der Mensch nimmt normalerweise täglich Wasser im Rahmen der Flüssigkeitsaufnahme zu sich, Wasser ist aber auch Bestandteil der festen menschlichen Nahrungsmittel.

Als chemische Verbindung kann Wasser aus den Elementen Wasserstoff (H2) und Sauerstoff (O₂) durch eine Oxidationsreaktion (Knallgasreaktion) synthetisiert werden. Diese Reaktion läuft exotherm ab. Gegenläufig lässt sich Wasser zum Beispiel im Rahmen einer Elektrolyse durch Energiezufuhr mit Hilfe von elektrischem Strom in die Bestandteile Wasserstoff und Sauerstoff zerlegen.

Das Wassermolekül, H₂O, hat wegen seiner besonderen chemischen und physikalischen Eigenschaften einen zentralen Platz in vielen Anwendungsgebieten. Diese sind vor allem das Dipolmoment, das aufgrund der unterschiedlichen Elektronegativitäten der beteiligten Elemente Wasserstoff, H, und Sauerstoff, O, sowie aufgrund der Geometrie des Wassermoleküls mit einem Bindungswinkel von ca. 104° und ausgeprägten Partialladungen entsteht, und damit verbunden die Fähigkeit, Wasserstoffbrückenbindungen auszubilden. Hieraus resultieren auch die weiteren besonderen Eigenschaften, der für eine Substanz mit dem Molekulargewicht des Wassers hohe Schmelz- und Siedepunkt, die Dichteanomalie des Wassers, die verglichen mit anderen Flüssigkeiten hohe spezifische Wärmekapazität und hohe Wärmeleitfähigkeit und die große Oberflächenspannung.

In der Natur ist Wasser nicht als Reinstoff zu finden, sondern es enthält gelöste Stoffe wie Ionen von Salzen und Gase. So liegt Wasser herkunftsbedingt in unterschiedlichen Qualitäten vor und hat unterschiedliche Eigenschaften und Bestandteile. Man bezeichnet und unterscheidet unter anderem Abwasser, Brackwasser, Grundwasser, Meerwasser, Mineralwasser, Nutzwasser, Oberflächenwasser, Regenwasser, Rohwasser, Salzwasser, Süßwasser.

Zu den aufbereiteten bzw. überprüften Wasserqualitäten zählen u.a. Trinkwasser, demineralisiertes Wasser, deionisiertes Wasser, destilliertes Wasser und Ultrareinstwasser.

### AUFBEREITUNG VON WASSER

Unbehandeltes Wasser weist eine Vielzahl von Fremdstoffen auf. Aus natürlichen Ressourcen entnommenes Wasser, wie Oberflächenwasser, Regenwasser oder Grundwasser, aber auch Meerwasser oder Mineralwasser, enthält, je nach Herkunft Verunreinigungen, unterschiedliche Salze und Mineralstoffe. Somit sind unter anderem Ionen von Magnesium Mg²⁺, Natrium Na⁺, Calcium Ca²⁺, Kalium K⁺, Eisen Fe²⁺, Fe³⁺, Chlorid Cl⁻ und Sulfat SO₄²⁻ im Wasser vorhanden. Weiterhin sind gelöste Gase im Wasser enthalten, z.B. Sauerstoff, Stickstoff und Kohlendioxid, das in wässriger Lösung im Gleichgewicht mit der hydratisierten Form als Kohlensäure und den zugehörigen Ionen, Carbonat, CO₃²⁻ und Hydrogencarbonat, HCO₃⁻ vorliegt. Außerdem kann Wasser auch Nitrate, Nitrite, organische Bestandteile und andere Stoffe, die durch direkte oder indirekte Quellen als "Verschmutzung" in das Wasser eingetragen werden, enthalten. Direkte Quellen sind hierbei zum Beispiel verschiedene Abwässer aus der Kanalisation bewohnter Gebiete und Industrie. Indirekte Einträge unerwünschter Substanzen in das Wasser erfolgen zum Beispiel durch mit dem Regen in das Grund- oder Oberflächenwasser eingebrachte Schadstoffe von der Boden-Oberfläche, aus der Luft oder aus den Böden, wie Pestizide, Feinstaub, Öl, Schwefelverbindungen, Stickoxide bzw. nitrose Gase, Düngemittelrückstände, Schwermetalle, Bestandteile von Klärschlamm.

In aufbereitetem Wasser sind im Gegensatz hierzu je nach Aufbereitungsverfahren und Verwendungszweck die vorweg genannten Bestandteile mehr oder weniger entfernt. Dabei kann die Aufbereitung von Wasser beispielsweise durch Reinigung, Filtration, Enthärtung, Entsalzung, Entfernung von Schwermetallen wie Blei, Mangan, Cadmium, Quecksilber, Eisen, Entkeimung und/oder Sterilisation erfolgen.

Die Gewinnung, Aufbereitung und Zusammensetzung und somit die Qualität von Trinkwasser unterliegt in Deutschland hohen Anforderungen. Diese regelt die Trinkwasserverordnung als nationale Umsetzung der EG-Trinkwasserrichtlinie von 1998. So enthält die Trinkwasserverordnung verschiedene Vorschriften, durch die die menschliche Gesundheit vor nachteiligen Einflüssen geschützt wird, die sich aus der Verunreinigung von Wasser ergeben, das für den menschlichen Gebrauch bestimmt ist. Dazu darf Trinkwasser weder Krankheitserreger, die durch Wasser übertragen werden können, noch chemische Stoffe in solchen Konzentrationen enthalten, die eine Schädigung der menschlichen Gesundheit nach sich ziehen könnten. Weiterhin dürfen Grenzwerte für festgelegte mikrobiologische Parameter und chemische Parameter nicht überschritten werden und müssen andere Grenzwerte für Indikatorparameter eingehalten werden. Auch die festgelegten Parameterwerte für radioaktive Stoffe dürfen nicht überschritten werden. So darf beispielsweise der Wert für die elektrische Leitfähigkeit von Trinkwasser bei 25° C 2790 µS/cm nicht überschreiten. Für den Parameter für den gesamten organischen Kohlenstoffgehalt (TOC), der ein Maß für die Belastung des Wassers mit organischen Stoffen darstellt, gibt es noch keinen Grenzwert in der Verordnung, der gemessene Wert muss der Anforderung "ohne anormale Veränderung" genügen. Der hierzu proportionale Wert für die "Oxidierbarkeit" darf einen Wert von 5,0 mg/l O₂ nicht übersteigen. Er beschreibt den Sauerstoffbedarf für eine Oxidation aller organischen Bestandteile. Der pH-Wert des Trinkwassers muss zwischen 6,5 und 9,5 liegen.

Bei einer desinfizierenden Aufbereitung des Trinkwassers dürfen nur bestimmte Stoffe verwendet werden und es müssen Mindestkonzentrationen an freiem Chlor, Chlordioxid oder anderen Aufbereitungsstoffen zur Desinfektion nach Abschluss der Maßnahme vorhanden sein.

Für pharmazeutische Zwecke sind demineralisiertes Wasser und destilliertes Wasser im Europäischen Arzneibuch aufgeführt. Entsprechend sind u.a. die Monographien von "gereinigtem Wasser (Aqua purificata)" und von "Wasser für Injektionszwecke (Aqua ad Injectabilia)" enthalten. Aqua purificata wird aus dem Rohstoff Trinkwasser hergestellt, das durch lonenaustausch, Umkehrosmose, Destillation oder andere geeignete Verfahren aufbereitet wird. Die Aufbereitung entspricht einer Demineralisierung, da die im Trinkwasser vorkommenden Anionen und Kationen durch die genannten Verfahren weitgehend entfernt werden. Aqua ad Injectabilia ist destilliertes Wasser, es darf ausschließlich durch Destillation erzeugt werden, da hohe Anforderungen an die Steriliät bestehen.

Reinstwasser bzw. ultrareines Wasser (URW), beinhaltet so gut wie keine Fremdstoffe. Es besteht im Wesentlichen aus der chemischen Verbindung H₂O. Dieses URW wird in vielen technologischen Bereichen benötigt. So kommt es beispielsweise in der Labor- und Medizintechnik, in der chemischen Analytik, in der Biochemie, in der Forschung, in der Pharmazie, bei der Medikamenten-Herstellung, bei der Herstellung von Injektionsflüssigkeiten und Infusionslösungen, und in der Technik, z.B. bei der Herstellung von integrierten Schaltkreisen, sowie bei der Herstellung von Kosmetika aber auch zur Reinigung von medizinischen Geräten und Präparaten (z.B. Endoskopen, Implantaten) und Präzisions-Teilen zum Einsatz.

Die Herstellung von URW erfolgt nach unterschiedlichen Verfahren wie Umkehrosmose, Elektrodeionisation, lonenaustausch oder Destillation auch in Kombination mit einer Reinigung durch Adsorption an Aktivkohle. Oftmals werden Reinstwasseranlagen eingesetzt, die unterschiedliche Reinigungsverfahren kombinieren, um ein möglichst reines Wasser zu produzieren.

Das durch Elektrodeionisationsanlagen gewonnene elektrodeionisierte Wasser (EDI-Wasser) hat bereits eine sehr hohe Wasserqualität. Es kann als Vorstufe zur Herstellung von URW verwendet werden. EDI-Wasser wird beispielsweise in einem kontinuierlichen Verfahren mittels Durchfluss von bereits enthärtetem oder auf andere Weise aufbereitetem Wasser durch eine Anordnung von Kathode und Anode und dazwischen liegenden Kammern, die jeweils durch Anionenaustauschermembran bzw. Kationenaustauschermembran begrenzt werden, erhalten. Hierbei werden mithilfe des entstehenden elektrischen Feldes und der ionenselektiven Membranen zwischen den Kammern die im Zufluss-Wasser (Permeat) gelösten Ionen in Richtung der Elektroden gelenkt, wobei sie sich in den entsprechenden Kammern im als Spülwasser verbleibenden Konzentrat anreichern, während sie aus dem als Diluat entnehmbaren Produktwasser entfernt werden. Das Diluat besteht aus hochreinem EDI-Wasser.

Weiterhin existieren verschiedene Spezifikationen für Wasser unterschiedlicher Reinheitsgrade. Gemäß ISO 3696:1987 wird Wasser für analytische Zwecke in drei verschiedene Reinheitsgrade bzw. Qualitätsstufen eingeteilt. Die ASTM D1193-06 (2011), eine Spezifikation der American Society for Testing and Materials, beschreibt 3 Qualitäten für Reinwasser und eine für Reinstwasser.

Zur Einteilung der unterschiedlichen beschriebenen Wasserqualitäten werden verschiedene Parameter herangezogen.

### Elektrische Leitfähigkeit

Die elektrische Leitfähigkeit von Wasser gibt an, wie stark das Wasser die Fähigkeit aufweist, den elektrischen Strom zu leiten. Sie wird dargestellt durch den Quotienten aus Stromdichte und elektrischer Feldstärke und stellt einen der aussagekräftigsten Parameter hinsichtlich des Gehalts an geladenen bzw. ionischen Fremdstoffen dar. Zur Bestimmung der elektrischen Leitfähigkeit werden in das zu untersuchende Wasser eine Anode und eine Kathode mit definierter Fläche und in definiertem Abstand eingebracht, eine Spannung zwischen diesen beiden angelegt und die resultierende Stromstärke gemessen. Die elektrische Leitfähigkeit, insbesondere von Wasser und Lösungen, ist temperaturabhängig und wird regelmäßig angegeben für eine Temperatur von 25 °C. Da die Wassermoleküle selbst aufgrund ihrer molekularen Struktur den Strom im Prinzip nicht leiten können, trifft die elektrische Leitfähigkeit eine Aussage über die Konzentration der im Wasser gelösten Ionen, die aufgrund ihrer elektrischen Ladung den Stromfluss ermöglichen. Mit steigender lonenkonzentration steigt die elektrische Leitfähigkeit und sinkt der elektrische Widerstand des Wassers. Für Meerwasser mit seinen gelösten Salzen liegen beispielsweise sehr hohe Leitfähigkeitswerte von 56 mS/cm (entsprechend 56 000 µS/cm) vor. Im Trinkwasser darf der Leitfähigkeitswert bei 25 °C bis zu 2790 µS/cm betragen. Durchschnittlich erreicht das deutsche Trinkwasser aufgrund der darin gelösten Salze je nach Gegend Werte zwischen 300 - 800 µS/cm und liegt damit deutlich unter dem geforderten Grenzwert. Während im Regenwasser aufgrund der wenigen gelösten Ionen ein Leitwert von durchschnittlich ca. 30 µS/cm vorliegt, sind in mineralhaltigem Quellwasser ca. 80-130 µS/cm zu messen.

Für die meisten Anwendungen, beispielsweise in Technik, Industrie und Medizin, ist eine niedrige lonenkonzentration des Wassers von ausschlaggebender Bedeutung. Der Leitfähigkeitswert von destilliertem Wasser liegt bei 25 °C aufgrund der größtenteils entfernten Ionen bei 0,5 bis 5 µS/cm, während elektrochemisch deionisiertes (EDI) Wasser eine elektrische Leitfähigkeit von unter 0,2 µS/cm (bis hin zu 0,08 µS/cm) aufweist. Gemäß DIN ISO 3696:1987 darf Wasser für analytische Zwecke der Qualitätsstufe 1 bei 25 °C eine maximale Leitfähigkeit von 0,1 µS/cm aufweisen; die Leitfähigkeit der Stufe 2 kann bis zu 1,0 µS/cm und die der Stufe 3 bis zu 5,0 µS/cm betragen.

Nach ASTM D1193-06 (2011) besteht an URW die Anforderung einer Leitfähigkeit von maximal 0,056 µS/cm.

URW, in dem nahezu keine Fremdstoffe enthalten sind, leitet den Strom nur noch aufgrund der chemischen Gegebenheit, dass das Wassermolekül einen Ampholyten darstellt, eine chemische Verbindung, die sowohl Protonen aufnehmen, als auch abgeben kann. Diese auch als Autoprotolyse bezeichnete Reaktion hat ihren Ursprung in der chemischen Umsetzung 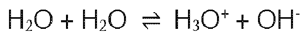 die auch im Ultrareinstwasser abläuft. Dabei ist zu berücksichtigen, dass die freien einzelnen Ionen H₃O⁺ und OH⁻ so nie vorliegen, sondern immer in ihrer hydratisierten Form, umgeben von nicht-protolysierten Wassermolekülen der Form H₂O und über gemeinsame Wasserstoffbrückenbindungen stabilisiert.

Das Gleichgewicht dieser Reaktion befindet sich stark auf der hier linken Seite. Trotzdem liegen die geladenen Produkte der rechten Seite in sehr geringer Konzentration vor. Daher hat die elektrische Leitfähigkeit des URW einen rechnerischen Grenzwert von 0,055 µS/cm bei 25 °C, der in reinstem Wasser auch bei Abwesenheit von Fremdionen nicht unterschritten werden kann.

### TOC-Gehalt

Ein anderer aussagekräftiger Parameter der Wasserqualität ist der Wert, der die Summe des gesamten organisch gebundenen Kohlenstoffs (Total Organic Carbon, TOC) in einem Probenvolumen wiedergibt. Der TOC umfasst sämtliche organischen Stoffe, u.a. Mikroorganismen, Bestandteile aus Biofilmen, verschiedene Zucker, Alkohole oder kunststoffbasierte Derivate. Nicht berücksichtigt wird anorganischer Kohlenstoff wie Carbonat und Hydrogencarbonat. Der TOC- Gehalt einer Wasserprobe stellt ein Maß für die organische Belastung des Wassers dar und wird vorzugsweise in [mg/l], [ppm] oder [ppb] angegeben. Hierbei entspricht 1 mg/l = 1 ppm = 1000 ppb. Er kann durch eine chemische oder thermische Oxidation der im Wasser enthaltenen organischen Kohlenstoffverbindungen zu Kohlenstoffdioxid und anschließender Bestimmung des entstandenen CO₂ bestimmt werden. Hierbei sei beispielsweise auf die DIN EN 1484 verwiesen, in der verschiedene Verfahren zur Ermittlung des TOC-Gehalts in unterschiedlichen Proben beschrieben werden.

Trinkwasser muss nach Verordnung einen TOC-Gehalt "ohne anormale Veränderung" aufweisen. Dies entspricht in etwa einem Wert von weniger als 1,5 mg/l.

Für URW nach ASTM D1193-06 (2011) ist ein Grenzwert des TOC-Gehalts von höchstens 0,050 mg/l, entsprechend 0,05 ppm oder 50 ppb, vorgegeben.

Destilliertes Wasser weist regelmäßig einen TOC-Gehalt von 0,2 mg/l auf, mit Reinstwasseranlagen kann URW mit einen TOC-Gehalt im Bereich von 3 ppb erreicht werden.

Zum Teil wird in Wasserproben zur Bezifferung der organischen Verunreinigungen statt des Werts für den TOC-Gehalt auch eine Bestimmung des chemischen Sauerstoffbedarfs (CSB) vorgenommen. Der CSB-Wert ist ein Messwert, der diejenige Menge an Sauerstoff angibt, die verbraucht würde, wenn alle oxidierbaren Stoffe mit Sauerstoff als Oxidationsmittel oxidiert würden. Die Messung erfolgt nasschemisch im Schwefelsauren mit einem Dichromat-Überschuss. Der CSB-Wert umfasst aufgrund der Versuchsanordnung teilweise auch anorganische oxidierbare Verbindungen im Wasser.

### DESINFEKTION

Die Desinfektion beinhaltet Maßnahmen, um totes oder lebendes Material in einen Zustand zu versetzen, in dem es diejenigen Individuen, mit denen es in Kontakt kommt, nicht mehr infizieren kann. Hierbei müssen infektiöse Keime entfernt, dezimiert oder inaktiviert werden.

Infektiöse Keime sind pathogene Mikroorganismen oder subzelluläre Strukturen, die bei Menschen, Tieren oder Pflanzen durch ihr Eindringen und ihre Vermehrung in diesen Organismen eine Infektion und unter Umständen in der Folge der Infektion auch eine Infektionskrankheit auslösen. Zu diesen Keimen zählen vor allem unterschiedliche Bakterien, Pilze, Algen, Mikroalgen und Protozoen. Im weiteren Sinn werden auch Parasiten, Viren, Retroviren, Viroide, Bakteriophagen, Prionen oder Transposons hinzu gerechnet.

Die Menge an in einer Probe vorhandenen Keimen bzw. Mikroorganismen wird in der Anzahl an Kolonie-bildenden Einheiten (KbE) angegeben. Um Infektionen zu verhindern, sollten vorhandene Keime reduziert werden, und somit die Anzahl der KbE verringert werden. Die Keimreduktion wird in log₁₀-Stufen gemessen. Eine log₁₀-Stufe entspricht einer Keimreduktion um eine Zehnerpotenz. Beim Händewaschen mit Seife erreicht man beispielsweise eine Keimreduktion um zwei log₁₀-Stufen, entsprechend einer Entfernung von 99 % der vor der Maßnahme vorhandenen KbE. Eine wirksame Desinfektion wird bei einer Keimreduktion von ca. drei bis sieben log₁₀-Stufen erreicht. Im Fall von sporenbildenden Keimen, z.B. Clostridium-Arten wie Clostridioides difficile oder Bacillus-Arten wie Bacillus subtilis, gilt ein Mittel bereits dann als sporizid, wenn bei der bestimmungsgemäßen Anwendung die Zahl der keimfähigen Sporen um drei log₁₀-Stufen reduziert wird.

Im Unterschied zur Desinfektion, bei der ein Gegenstand oder eine Oberfläche so behandelt wird, dass er nicht mehr infizieren kann, beinhaltet die Sterilisation im eigentlichen Sinn die Entfernung aller vermehrungsfähigen Keime, pathogen und apathogen, einschließlich ihrer Dauerformen, z.B. Sporen, sowie Viren und infektiösen Proteine.

Für die Sterilisation fordert man zur technischen Abgrenzung gegenüber der Desinfektion eine Keimreduktion um acht oder mehr log₁₀-Stufen. Dies geschieht vor dem Hintergrund, dass in der Praxis eine vollständige Sterilisation nicht mit absoluter Sicherheit gewährleistet werden kann.

Im Rahmen der Desinfektion wird nach den verschiedenen Einsatzbereichen unterschieden. Hier sind die hygienische und chirurgische Händedesinfektion, die Hautantiseptik, Flächen-, Instrumenten-, Wäsche- und Raumdesinfektion, sowie die Desinfektion von Abfällen zu nennen. Außerdem spielt die Desinfektion von Wasser für unterschiedlichste Anwendungen eine entscheidende Rolle, da sich im Wasser bei entsprechender Temperatur vorhandene Mikroorganismen aufgrund der physiologischen Gegebenheiten gut vermehren. Trinkwasser ist nur bei entsprechender Keimbelastung zu desinfizieren. Sowohl Schwimmbad- und Badebeckenwasser, als auch in der Industrie genutztes Prozess-, Kühl- oder Kesselwasser müssen in der Regel desinfiziert werden.

Es werden neben physikalischen Verfahren insbesondere chemische Desinfektionsmittel (und Desinfektionsverfahren) angewendet, die nach ihrem Wirkungsspektrum unterteilt werden können in bakterizide, fungizide, levurozide, sporizide und viruzide, sowie in mykobakterizide und tuberkulozide Mittel (und Verfahren).

Zusätzlich besteht bei Desinfektionsmitteln, wenn sie in Verkehr gebracht werden sollen, das Problem, dass sie verschiedenen gesetzlichen Regelungen unterliegen. So gelten sie je nach Anwendungsbereich als Arzneimittel, Medizinprodukt, Kosmetikum oder Biozid. Als Biozid unterliegen sie der EU-Biozidverordnung (EU) NR. 528/2012 des Europäischen Parlaments und des Rates vom 22. Mai 2012. Die Verordnung regelt auch, dass für die erforderliche Zulassung eines bioziden Wirkstoffs ein Wirksamkeitsnachweis erbracht werden muss.

Die jeweilige Wirksamkeit eines Desinfektionsmittels gegen verschiedene Keime und für verschiedene Einsatzbereiche wird anhand von Prüfvorschriften untersucht, die beispielsweise in den Europäischen Normen zu finden sind.

Hierbei beinhaltet die Wirksamkeitsprüfung eines Desinfektionsmittels gemäß den Vorgaben der EN 14885 einen mehrstufigen Prozess. In Phase 1 wird eine qualitative Screening-Prüfung vorgenommen. Phase 2 ist unterteilt in Phase 2 Stufe 1, bei der eine quantitative Prüfung in Suspension im Reagenzglas erfolgt und Phase 2 Stufe 2, bei der eine Untersuchung der Wirksamkeit im praxisnahen Versuch erfolgt. Es kommen unter anderem folgende Europäischen Normen (EN) zur Anwendung:

Die Europäischen Normen, deren Geltungsbereich in der Humanmedizin und im Industriebereich liegt, im Überblick:

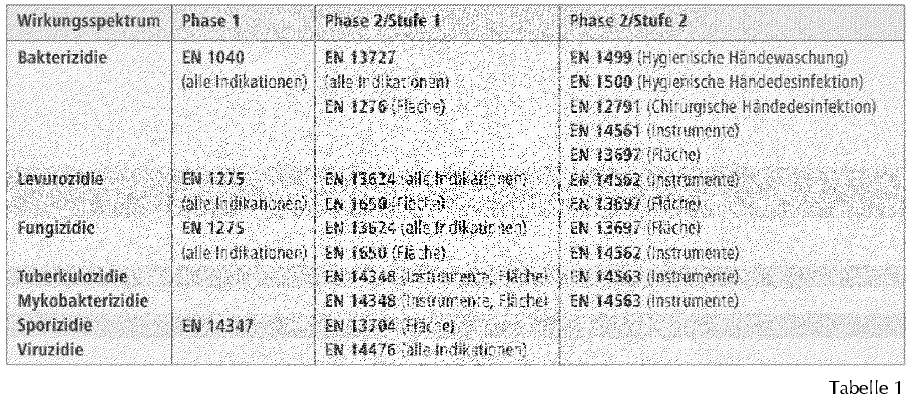

Chemische Desinfektionsmittel weisen je nach Bestandteilen unterschiedliche keimvermindernde Mechanismen auf, die sie für den unterschiedlichen Einsatz kennzeichnen. Einer dieser Mechanismen ist die Oxidationswirkung verschiedener Desinfektionsmittel. Hier werden durch die Elektronenübertragung Mikroorganismen abgetötet oder inaktiviert, beispielsweise werden SH-Gruppen von Proteinen oxidiert, wodurch diese ihre Funktionsfähigkeit verlieren.

Oxidierende Desinfektionsmittel enthalten neben Wasserstoffperoxid, Persäuren und Ozon vor allem Chlor und Chlorverbindungen. Wässrige Lösungen von Chlor und Chlorverbindungen wirken bakterizid, fungizid, levurozid, viruzid und auch sporizid.

Chlordioxid als Desinfektionsmittel ist über einen weiten pH-Bereich wirksam und bildet wenig chlorierte Nebenprodukte aus den organischen Verunreinigungen des behandelten Wassers. Nachteilig ist, dass zur Herstellung von Chlordioxid-Lösungen aus Salzsäure und Chlorit chemische Gefahrstoffe benötigt werden. Weiterhin weisen die Lösungen nur unzureichende Stabilität auf, da sich Chlordioxid leicht zu Chlorit zersetzt. Aus wässriger Chlorit-Lösung werden unter Einwirkung von Säure giftige Gase freigesetzt.

Hypochlorige Säure weist in der Verwendung weniger Risiken auf. Vor allem Hypochlorit oder Chloramin T in wässriger Lösung eignet sich für die Einsatzbereiche zur Desinfektion von Oberflächen, Instrumenten, Haut und Wasser. Die hypochlorige Säure kommt für eine Vielzahl von Verwendungen in Frage, auch in der Lebensmittelindustrie und der Trinkwasseraufbereitung. Die Desinfektionswirkung entfaltet sich innerhalb weniger Sekunden bis Minuten.

In den Desinfektionsmitteln, in denen Alkalihypochlorit in wässriger Lösung enthalten ist, liegen gelöstes Hypochlorit-Anion, hypochlorige Säure und gasförmiges Chlor in einem pH-Wertabhängigen Gleichgewicht vor. Bei der Einleitung von gasförmigem Chlor in Wasser disproportioniert das Chlor und es entsteht Salzsäure und hypochlorige Säure.

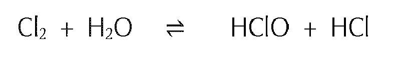

Die hypochlorige Säure ist eine instabile Verbindung. Auch in geringen Konzentrationen neigt sie in wässriger Lösung zur Disproportionierung zu Chlorsäure und Salzsäure.

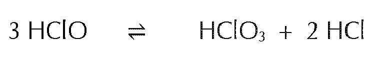

Daher wird in Lösungen mit hypochloriger Säure zu deren Stabilisierung der pH-Wert angehoben. Unter Zugabe von beispielsweise NaOH dissoziiert die hypochlorige Säure.

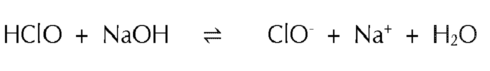

Ähnlich stellt sich bei der Auflösung von Alkalihypochlorit in Wasser in niedriger Konzentration zunächst unter Bildung einer basisch reagierenden Lösung (pH-Wert ca. 9,7) obiges Gleichgewicht ein. Mit steigendem pH-Wert verschiebt sich dieses Gleichgewicht zunehmend auf die Seite des Hypochlorit-Anions.

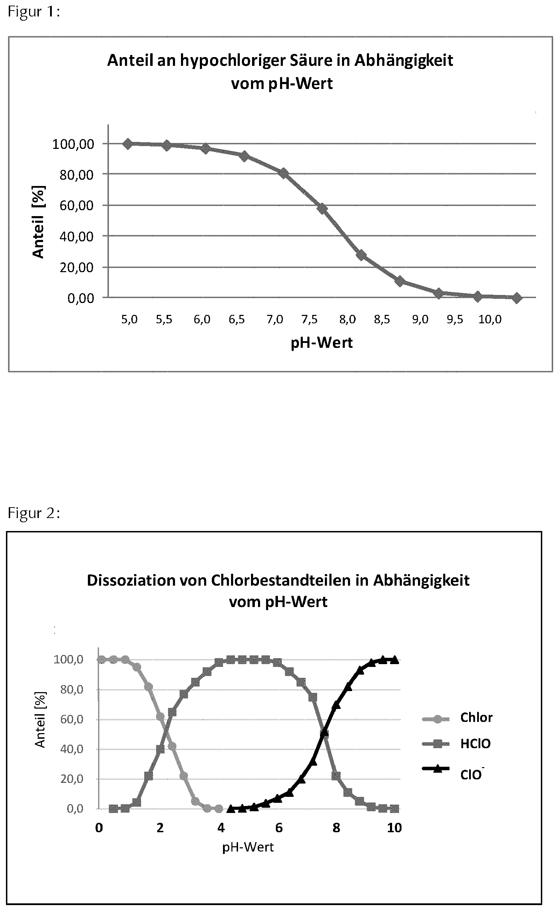

Die Figuren 1 und 2 veranschaulichen diese Gleichgewichtsverhältnisse in graphischer Form.

Gemäß Figur 2 liegen in einem pH-Bereich ab 2 nur ca. 35-40 % des vorhandenen Chlors als HClO vor, ca. 65-60 % sind Chlorgas (Cl₂). Dieses kann in gasförmiger Form aus dem System entweichen, verbreitet einen unangenehmen Geruch und entfaltet nicht mehr die gewünschte desinfizierende Wirkung.

In einem pH-Bereich von ca. 3,5 bis ca. 7,5 liegt das Gleichgewicht zugunsten von undissoziierter hypochloriger Säure und die Desinfektionswirkung ist optimal. HClO ist sehr reaktiv und reagiert mit einer Vielzahl oxidierbarer Biomoleküle, beispielsweise an SH-Gruppen, C-C-Doppelbindungen oder unterschiedlichen Stickstoffgruppen. Durch die Denaturierung von Proteinen in Mikroorganismen werden diese abgetötet oder inaktiviert.

Steigt der pH-Wert über 7,5 überwiegt die dissoziierte Form von HClO mit dem Hypochlorit-Anion. Das OCl⁻ -Anion liegt in hydratisierter Form vor und kann nur eine geringe Wirkung gegen Mikroorganismen entfalten, da es aufgrund der Hydrathülle und der negativen Ladung nur unzureichend mit den Oberflächen der Mikroorganismen in Wechselwirkung treten kann.

Daher ergibt sich für Hypochlorit enthaltende Desinfektionsmittel das Problem, dass einerseits die hypochlorige Säure nur in einem begrenzten pH-Bereich von 3,5 bis 7,5 in ausreichender Konzentration in undissoziierter Form vorliegt, in der die beste desinfizierende Wirkung erreicht werden kann und andererseits in dieser Form instabil ist und zur Zersetzung neigt.

Weiterhin hat bei den oxidierend wirkenden Desinfektionsmitteln die Redoxspannung, auch Redoxpotential (Oxidation-Reduction-Potential, ORP) genannt, einen erheblichen Einfluss auf die Oxidationsfähigkeit und damit die Wirksamkeit des Mittels.

Grundsätzlich werden in einer Redoxreaktion Elektronen von einem Stoff auf einen anderen Stoff übertragen. Der elektronen-aufnehmende Stoff, beispielsweise die hypochlorige Säure als Wirkstoff des Desinfektionsmittels wird reduziert, der elektronen-abgebende Stoff, beispielsweise der zu beseitigende Mikroorganismus, wird oxidiert. Das Redoxpotential ist ein Maß für die jeweilige Bereitschaft, mit der der Wirkstoff Elektronen aufnehmen kann und so die desinfizierende Wirkung entfaltet. Es ist von Druck, Temperatur und pH-Wert abhängig und wird als elektrische Spannung in mV gemessen. Ein hohes positives Redoxpotential einer Desinfektionsmittellösung bedeutet eine hohe Bereitschaft, Elektronen aufzunehmen und Mikroorganismen zu zerstören. Das hier bezeichnete Redoxpotential beschreibt die elektrische Spannung, die von einem Wirkstoff in oxidierter Form gegenüber einer Referenz-Elektrode unter üblichen Standardbedingungen (25 °C; 101,3 kPa; pH = 0; lonenaktivitäten 1 mol/l) erzeugt wird.

Das Redoxpotential einer Lösung kann gemessen werden, beispielsweise mit einem Metallsensor, der in die Lösung taucht und über den die Spannung im Vergleich zu einer Referenzelektrode mithilfe eines pH/mV-Messgeräts gemessen wird. Als Referenzelektrode kann die Normalwasserstoffelektrode dienen, es kann auch ein System mit Ag/AgCl und mit KCl-Elektrolyt verwendet werden oder andere gängige REDOX-Einstabmessketten.

In einer in situ hergestellten wässrigen Hypochlorit-Lösung kann unmittelbar nach der Herstellung unter Berücksichtigung folgender Redox-Reaktion: 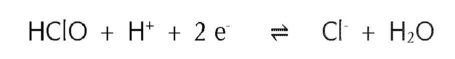 bei einem pH-Wert von 0 ein Potential von + 1,48 V gemessen werden. Bei einem pH-Wert von 8,5 ist immer noch ein Potential von + 700 mV vorhanden.

Mit der Alterung der Lösung nimmt das ORP und damit auch Oxidationskraft und die desinfizierende Wirkung ab. Nach einer Lagerung oder einem Transport von ca. 7 Tagen ist nur noch ein Bruchteil des ursprünglichen Potentials vorhanden.

Gleichzeitig ist hypochlorige Säure auch Bestandteil der zellulären Immunantwort von Wirbeltieren einschließlich des Menschen. Im Rahmen des oxidativen Burst wird von dem Enzym Myeloperoxidase in den neutrophilen Granulozyten aus Wasserstoffperoxid und Chloridionen Wasser und hypochlorige Säure gebildet und ins Phagosom abgegeben, um eingedrungene Mikroorganismen zu deaktivieren.

Die erwünschten keimreduzierenden Wirkungen der Desinfektionsmittel werden von unerwünschten Wirkungen begleitet. Hier ist beispielsweise bei alkoholhaltigen Mitteln eine hautschädigende Wirkung, sowie eine fehlende Wirkung gegen bakterielle Endosporen zu nennen. Die Anwendung mancher Desinfektionsmittel kann zur Entwicklung von Resistenzen bei manchen Mikroorganismen führen. In der Folge vermehren sich die resistenten Organismen, wodurch eine Desinfektion mit dem betreffenden Mittel nicht mehr wirksam durchgeführt werden kann.

Bei hypochlorit-haltigen Lösungen ergibt sich ein Problem dadurch, dass aufgrund der hohen Reaktionsfreudigkeit des freien HClO (=Aktivchlor) ein Teil des desinfizierenden Potentials der Lösung durch Chlorzehrung bereits aufgebraucht wird. Die Chlorzehrung stellt den Verbrauch des aus Hypochlorit freigesetzten aktiven Chlors dar, der durch Bindung an oder Reaktion mit sämtlichen, in der zu desinfizierenden Probe enthaltenen organischen und anorganischen Verbindungen ausgelöst wird. Je höher die anfängliche Konzentration an Verunreinigungen in einer Probe ist, desto mehr Hypochlorit muss eingesetzt werden, um nach Chlorzehrung noch einen ausreichenden desinfizierenden Effekt zu erzielen.

Für die herkömmlichen Desinfektionsmittel, die Hypochlorit in wässriger Lösung enthalten ist es von Nachteil, dass die Lösung in einem pH-Bereich von 4 bis 7,5 am wirksamsten ist, bei diesen pH-Werten aber die hypochlorige Säure, wie oben beschrieben, selbst in geringer Konzentration wenig stabil ist. Sowohl der Gehalt an HClO als auch das Redoxpotential einer Hypochlorit-Lösung nimmt während der Lagerung ab.

Weiterhin verursachen die Lagerung und der Transport von anwendungsfertigen, wässrigen Desinfektionslösungen verhältnismäßig hohe Kosten, da aufgrund der niedrigen Konzentrationen des desinfizierenden Inhaltsstoffes große Mengen an Wasser transportiert und gelagert werden müssen. Es wäre daher wünschenswert, eine wässrige Hypochlorit-haltige Lösung erst direkt vor der Anwendung herzustellen.

### STAND DER TECHNIK

Aus dem Stand der Technik sind verschiedene Verfahren zur Aufbereitung von Wasser oder zur Herstellung von Desinfektionsmitteln bekannt.

Beispielsweise werden Anlagen angeboten, die Trinkwasser elektrolytisch aktivieren und für den menschlichen Genuss aufbereiten. Die Aktivierung erfolgt z.B. durch eine Membran-Elektrolyse. Dieses aufbereitete Wasser wird als "basisches Wasser" bzw. "basisches Aktivwasser" bezeichnet. Es wirkt im Körper als Antioxidans und neutralisiert schädliche Radikale. Dieses Wasser enthält die üblichen Mineralstoffe und gelösten Wasserstoff. Ferner weist es durch die elektrochemische Behandlung ein Redoxpotential auf, das sich aber in 24-36 Stunden abbaut.

Weiterhin ist es bekannt, Wasser ohne chemische Zusatzstoffe durch Wasserelektrolyse an Diamant- oder Metallelektroden aufzubereiten. Bei dieser so genannten "elektrischen Wassserdesinfektion" entstehen durch die Einwirkung von Strom auf das Wasser ohne chemische Zusatzstoffe Ozon, Wasserstoffperoxid und Hydroxylradikale mit hoher Oxidationskraft. Das beschriebene Verfahren ist zur Entkeimung hochreiner Prozesswässer geeignet. Dies wird zum Beispiel auf der Seite www.samro.ch/deutsch/technologien/elektrische-wasserdesinfektion-ewd/ der Samro Technik AG beschrieben.

Das ebenfalls bekannte System ActiWa ^{®} der Samro Technik AG erzeugt aus enthärtetem Wasser durch Zugabe einer NaCl-Sole und anschließender Elektrolyse mit Membran mittels Diamant- oder Metallelektroden starke Desinfektionsmittel, deren pH-Wert bei ca. 6 - 8,5 und deren Redoxpotential bei ca. 800 - 1000 mV liegt. Die Wirksamkeit der Lösung ist bei einem pH-Wert von 8,5 nur noch gering. Bei einem pH-Wert von 6 ist die Desinfektionswirkung vorhanden, die Lösung ist aber sehr korrosiv. Die Desinfektionsmittel eignen sich für die Wasserdesinfektion und die Desinfektion von Oberflächen wie Maschinen im nassen Bereich durch Spülung. Die Desinfektion auf trocknenden Flächen, die nicht mit Wasser geflutet werden sollen, ist nicht möglich. Die beschriebenen Lösungen sind nur bedingt lagerstabil und entwickeln keine Langzeitdesinfektionswirkung. (Www.samro.ch/technologien/Desinfektionsmittel-actiwa/).

In der DE 20 2018 102 846 U1 wird ein Desinfektionsmittel beschrieben, das eine wässrige Natriumhypochlorit-Lösung mit einer Konzentration von ≤ 0,1 % enthält und das zusätzlich mit Natriumcarbonat in einer Konzentration von 0,4 bis 2,5 g/l stabilisiert wird. Durch die Pufferwirkung des Natriumcarbonats kann der pH-Wert in diesem Desinfektionsmittel nur sehr schwer in den für Hypochlorit optimalen Wirkungsbereich von pH 3,5 bis 7,5 verschoben werden.

Die DE 10 2006 043 267 A1 beschreibt ein Verfahren zur Herstellung eines Desinfektionsmittels durch elektrochemische Aktivierung (ECA) von Wasser und ein Verfahren zur Desinfektion von Wasser mittels eines solchen Desinfektionsmittels. Hierzu wird ein Verfahren zur Desinfektion von Wasser vorgeschlagen, bei dem aus Trink- oder Brauchwasser, Regenwasser, Industriewasser oder dergleichen durch elektrochemische Aktivierung zumindest eines Teilstroms des zu desinfizierenden Wassers eine Elektrolytlösung zugesetzt wird und das mit der Elektrolytlösung beaufschlagte Wasser in einem Elektrolysereaktor mit wenigstens einem Kathodenraum mit einer Kathode sowie mit wenigstens einem von dem Kathodenraum räumlich, insbesondere mittels eines Diaphragmas oder einer Membran, getrennten Anodenraum mit einer Anode durch Anlegen einer Gleichspannung an die Elektroden mit einem elektrischen Strom beaufschlagt wird, um die Wasser-/Elektrolytlösung in einen zur Desinfektion geeigneten Zustand zu versetzen, wobei die elektrische Leitfähigkeit des elektrochemisch zu aktivierenden Wassers vor Zusetzen der Elektrolytlösung auf einen Wert von höchstens 350 µS/cm eingestellt wird. Aufgrund der hier vorliegenden Anordnung mit räumlich getrenntem Anoden- und Kathodenraum und einer Membran zwischen beiden Räumen erhält man einen Anolyten mit sehr geringem pH-Wert, der Katholyt mit hohem pH-Wert wird komplett verworfen. Die Ausbeute ist daher gering. Der Anolyt ist hoch korrosiv gegenüber Metallen. Weiterhin kann aufgrund des pH-Werts im Anolyten Chlorgas entstehen.

In der WO 2007/093395 A2 wird ein ähnliches Verfahren zur Herstellung eines Desinfektionsmittels durch elektrochemische Aktivierung (ECA) von Wasser beschrieben, bei dem Wasser eine Elektrolytlösung zugesetzt wird und das mit der Elektrolytlösung beaufschlagte Wasser in Form einer verdünnten Wasser-/Elektrolytlösung in einem Elektrolysereaktor mit wenigstens einem Kathodenraum mit einer Kathode sowie mit wenigstens einem von dem Kathodenraum räumlich, insbesondere mittels eines Diaphragmas oder einer Membran, getrennten Anodenraum mit einer Anode durch Anlegen einer Gleichspannung an die Elektroden mit einem elektrischen Strom beaufschlagt wird, um die verdünnte Wasser-/Elektrolytlösung in einen zur Desinfektion geeigneten, metastabilen Zustand zu versetzen, wobei der pH-Wert der Lösung in dem Anodenraum auf einen Wert zwischen 2,5 und 3,5 gesteuert wird. Auch hier wird stark saures Anolyt-Wasser hergestellt, das nicht für alle Anwendungen geeignet ist.

Die EP 0 470 841 A2 beschreibt ein Verfahren und eine Vorrichtung zur Herstellung von sterilisiertem Wasser, bei dem mit Natriumchlorid versetztes Wasser und mit Chlorwasserstoff versetztes Wasser gemischt wird, in einer Elektrolysezelle ohne Diaphragma elektrolysiert und das resultierende elektrolysierte Wasser mit Wasser verdünnt wird. Dabei soll der pH-Wert in einem Bereich von 3 bis 7 und die verbleibende Chlorkonzentration in einem Bereich von 1.0 bis 200 ppm eingestellt werden. Das Verfahren soll die Ablagerung von Calciumcarbonat an der Kathode verhindern. Die Aktivchlorkonzentration und das Redoxpotential des aus diesem Verfahren resultierenden Wassers nehmen aufgrund des niedrigen pH-Werts mit dem Zeitverlauf ab. Weiterhin hat das Wasser in dem pH-Bereich von 3 korrosive Eigenschaften beispielsweise auf das Leitungsnetz. Nur in einem pH-Wert-Bereich von 6,5 bis 9,5 besitzt das Wasser Trinkwasserqualität.

Die EP 1 036 037 B1 beschreibt eine Zusammensetzung mit elektrochemisch aktiviertem Wasser (ECA-Wasser) zur Desinfektion und Sterilisation von Gegenständen, bei der das ECA-Wasser einen Korrosionshemmer oder ein Netzmittel und eine Kombination dieser Bestandteile enthält. Die elektrochemische Aktivierung, eine Elektrolyse von mit Salz versetztem Wasser in durch eine Membran voneinander getrennten Kathoden- und Anodenkammern, führt zu ECA-Wasser mit hoher Oberflächenspannung, bei dem eine sichere Benetzung der zu desinfizierenden Gegenstände und eine zuverlässige Desinfektion nicht möglich ist. Weiterhin wirkt das ECA-Wasser korrosiv auf Metall, was nachteilig ist für zu desinfizierende Metall-Gegenstände oder Leitungen. Daher wird für vorliegende Mischung das ECA-Wasser mit einem Korrosionshemmer oder einem Netzmittel oder einer Kombination von beidem versetzt. Diese Zusätze schränken den Anwendungsbereich des ECA-Wassers zur Desinfektion ein, da nicht in allen Bereichen Zusätze erwünscht sind.

Die aus dem Stand der Technik bekannten Verfahren erzeugen einerseits stark saure, anodische Lösungen, die aufgrund des niedrigen pH-Werts korrosiv reagieren, aufwendig in der Handhabung sind und die Gefahr der Chlorausgasung beinhalten. Andererseits erzeugen diejenigen Verfahren, die ohne Membran elektrolysieren oder die nach einer Membranelektrolyse Anolyt und Katholyt wieder zusammenführen, ein Wasser, das zwar im Moment der Herstellung desinfizierend wirkt und zu diesem Zeitpunkt keimfreies Wasser liefert. Dieses Wasser besitzt aber aufgrund der Zusammensetzung keine desinfizierende Langzeitwirkung und kann jederzeit einer Rekontamination unterliegen. Die desinfizierenden Bestandteile reagieren zurück zu Natriumchlorid und Wasser.

### AUFGABE

Der vorliegenden Erfindung liegt somit die Aufgabe zugrunde, ein Wasser zur Verfügung zu stellen, mit dessen Hilfe die beschriebenen Nachteile sowie die Probleme des Standes der Technik überwunden werden können. Insbesondere sollen mit diesem Wasser Desinfektionslösungen auf der Basis von Hypochlorit hergestellt werden können, deren Gehalt an hypochloriger Säure HClO (Aktivchlor-Gehalt) und deren Redoxpotential (ORP) trotz Lagerung und/oder Transport im Zeitpunkt der Anwendung weitgehend konstant bleibt.

Weiterhin ist es eine Aufgabe der vorliegenden Erfindung, Desinfektionsmittellösungen mit einem geringen Gehalt an Natriumchlorid zur Verfügung zu stellen, um den Einsatz an korrosionsempfindlichen Oberflächen zu ermöglichen.

### ERFINDUNG

Diese Aufgabe wird durch das erfindungsgemäße ultrareine Wasser mit den Merkmalen des Anspruch 1, durch das Verfahren zur Herstellung von ultrareinem, elektrochemisch modifiziertem Wasser gemäß Anspruch 5, sowie durch das Verfahren zur Herstellung einer Desinfektionslösung nach Anspruch 9 gelöst.

Die durch das erfindungsgemäße Verfahren hergestellte Desinfektionslösung ist universell einsetzbar. Sie ist sowohl für eine Haut- und Händedesinfektion durch Aufsprühen oder Auftragen und Verreiben geeignet, als auch für die Sprühdesinfektion oder die Wischdesinfektion von Oberflächen und die Instrumentendesinfektion. Weiterhin kann sie für die Aerosoldesinfektion von Oberflächen und von Räumen bzw. Raumluft, aber auch für die Wunddesinfektion eingesetzt werden. Ebenso kann sie zur Kaltvernebelung bei der Hygienisierung der Raumluft und der Geruchsneutralisation verwendet werden.

Die desinfizierende Wirkung wird dabei nach Europäischen Normen geprüft. Mit der erfindungsgemäßen Desinfektionslösung kann gegenüber Bakterien eine Keimreduktion um mindestens den Faktor 10⁵ erreicht werden. Gegen Mykobakterien, Hefen, Pilze sowie Viren aber auch Bakteriophagen ist eine Keimreduktion um mindestens den Faktor 10² möglich. Sporen werden mit mindestens dem Faktor 10³ dezimiert.

Ultrareines Wasser gemäß dem Oberbegriff des Anspruch 1 ist ein Reinstwasser, wie es in unterschiedlichen Normen, beispielsweise DIN ISO 3696, ASTM D1193-91, DIN EN 13060, Ph. Eur. 10, DAB 2019 festgelegt ist. Das ultrareine Wasser weist eine elektrische Leitfähigkeit von kleiner als 0,1 µS/cm auf und ist im Wesentlichen frei von organischen Bestandteilen und von Gasen. Die elektrische Leitfähigkeit wird bei einer Temperatur von 25 °C gemessen. Das ultrareine Wasser soll im Wesentlichen frei sein von anorganischen und organischen Bestandteilen außer den Wassermolekülen. Ein Maß für den Anteil an organischen Bestandteilen ist der TOC-Gehalt. Ultrareines Wasser, in dem praktisch keine organischen Bestandteile enthalten sind, weist einen TOC-Gehalt von höchstens 0,5 mg/l auf.

Da eine Verunreinigung des Reinstwassers durch einen Eintrag von Fremdstoffen aus Kontaktflächen z.B. zu Behältnissen, Stopfen und Verschlüssen, Leitungen oder Abfüllanlagen oder zu Gasen wie auch der Umgebungsluft nicht ganz ausgeschlossen werden kann, ist das Wasser im Wesentlichen frei von organischen Bestandteilen und Gasen. Grundsätzlich sollte das ultrareine Wasser so wenige Verunreinigungen als möglich aufweisen. Es weist einen Wert von kleiner als 0,1 µS/cm für die elektrische Leitfähigkeit auf. Diese Leitfähigkeit entspricht einem Wasser, das im Wesentlichen frei ist von Ionen. Dies beinhaltet auch Ionen von Schwermetallen, Alkali- und Erdalkalimetallen.

Aufgrund von autoprotolytischen Vorgängen sind in dem ultrareinen Wasser gemäß dem Oberbegriff neben H₂O-Molekülen auch in stöchiometrisch gleichem Verhältnis Oxonium-Ionen (H₃O⁺-Ionen) und Hydroxid-Ionen (OH⁻-Ionen) vorhanden.

Das erfindungsgemäße Wasser weist neben den durch autoprotolytische Vorgänge entstandenen OH⁻-Ionen und H₃O⁺-lonen einen Überschuss an OH⁻-Ionen auf. Im erfindungsgemäßen Wasser ist somit die Konzentration an OH⁻-Ionen höher als diejenige an H₃O⁺-Ionen. Die Konzentration ist dabei so erhöht, dass sich ein pH-Wert von 7,5 bis 9,5 einstellt.

Dieser Überschuss an OH⁻-Ionen wird OH⁻-Überschuss genannt. Die OH⁻-Ionen werden dabei über eine radikalische Zwischenstufe, OH•-Radikale, gebildet. Die OH•-Radikale im Herstellungsprozess sind hochreaktiv und kurzlebig, so dass im erfindungsgemäßen Wasser OH⁻-Ionen vorliegen.

Aufgrund des kennzeichnenden OH⁻-Überschusses weist das erfindungsgemäße Wasser, anders als das Wasser gemäß dem Oberbegriff des Anspruch 1, eine höhere Leitfähigkeit als 0,1 µS/cm auf. Dies ergibt sich, wie bereits oben dargelegt, durch die negative Ladung der überschüssigen OH⁻-Ionen und ihre Fähigkeit, dadurch den elektrischen Strom zu leiten. Die genannte Leitfähigkeit von kleiner als 0,1 µS/cm bezieht sich auf den Ausgangsstoff, das ultrareine Wasser. Dessen Leitfähigkeit wird durch den Überschuss an OH⁻-Ionen erfindungsgemäß verändert.

Es hat sich gezeigt, dass es insbesondere vorteilhaft ist, wenn die Konzentration an überschüssigen OH⁻-Ionen in etwa so eingestellt ist, dass der pH-Wert bei 8,5 bis 9,5 liegt. Besonders bevorzugt ist ein pH-Wert von 9,2.

Der pH-Wert des erfindungsgemäßen Wassers kann dabei mit üblichen Methoden bestimmt werden, beispielsweise mittels einer Glaselektrode und einer Bezugselektrode, wie einer Silber-Silberchlorid-Halbzelle, als Einstabmesskette. Es können als Mess- und Bezugselektroden auch andere geeignete Elektroden, wie beispielsweise eine Normal-Wasserstoffelektrode, verwendet werden.

In dem erfindungsgemäßen Wasser befinden sich neben den H₂O-Molekülen und deren autoprotolytisch gebildeten Oxonium- und Hydroxid-Ionen mit Ausnahme der überschüssigen OH⁻-Ionen praktisch keine weiteren Bestandteile.

Das ultrareine Wasser kann auch eine elektrische Leitfähigkeit von maximal 0,056 µS/cm und einem TOC-Gehalt von maximal 0,05 mg/l aufweisen. Das erfindungsgemäße Wasser selbst weist dann aufgrund des Überschusses an OH⁻-Ionen diesen niedrigen Leitwert nicht mehr auf.

Das erfindungsgemäße Wasser erhält einen Überschuss an OH⁻-Ionen gemäß einer bevorzugten Ausführung durch eine elektrochemische Modifizierung.

Der Überschuss an OH⁻-Ionen kann beispielsweise erzeugt werden, indem dem ultrareinen Wasser durch elektrochemische Modifizierung H⁺ bzw. H₃O⁺-Ionen entzogen werden. Dies kann beispielsweise durch das erfindungsgemäße Verfahren erfolgen, jedes andere Verfahren, bei dem ein Überschuss an OH⁻-Ionen erzeugt wird, ist aber auch geeignet. So wäre ein elektrochemisches Membran-Verfahren möglich, bei dem positiv geladene H⁺ bzw. H₃O⁺ -Ionen auf einer Seite einer Membran an einer Kathode angereichert werden, während gleichzeitig negativ geladene OH⁻ -Ionen auf der anderen Seite der Membran an einer Anode angereichert werden. Anschließend werden die Kationen mit einer Spülflüssigkeit entfernt. Ebenfalls wäre es denkbar, ultrareines Wasser mit O₂-Gas anzureichern und anschließend elektrochemisch die O₂-Moleküle zu OH⁻-Ionen zu reduzieren.

Die elektrochemische Modifizierung kann gemäß Anspruch 3 insbesondere dadurch erreicht werden, dass das ultrareine Wasser mit einer Elektrolyse behandelt wird und der bei der Elektrolyse entstandene Wasserstoff (H2) entfernt wird. Die Elektrolyse umfasst dabei die Durchleitung des Wassers durch eine Elektrolysezelle, wobei die Elektrolysezelle mindestens eine Kathodenfläche und mindestens eine Anodenfläche aufweist, wobei die Kathodenfläche um den Faktor 10³ bis um den Faktor 10⁷ größer ist als die Anodenfläche. Unter Kathoden- bzw. Anodenfläche wird hierbei die Fläche verstanden, die für die elektrolytische Umsetzung als Reaktionsfläche zur Verfügung steht.

Bei der Elektrolyse wird das ultrareine Wasser über die Elektroden, die in einem bestimmten Abstand zueinander angeordnet sind, mit einer für eine elektrochemische Modifizierung bei dem gewählten Abstand ausreichenden Spannung aus einer Gleichspannungsquelle beaufschlagt.

Die Entfernung des bei der Elektrolyse entstandenen Wasserstoffs erfolgt bereits in der Elektrolysezelle oder bevorzugt nach der Durchleitung des elektrolysierten Wassers durch die Elektrolysezelle mittels bekannten Verfahren. So kann der entstandene gasförmige Wasserstoff beispielsweise durch eine Membran-Entgasung oder durch eine Vakuumentgasung mittels einer Wasserstrahlpumpe entfernt werden. Der entstandene Wasserstoff kann weiterhin durch thermische Entgasung oder Ultraschallentgasung entzogen werden. Bei einer Ultraschallentgasung ist zumeist noch ein weiteres Verfahren anzuschließen, um eine möglichst vollständige Entfernung des Gases zu erreichen. Die Entgasung kann vorteilhafterweise an einer großen Oberfläche erfolgen. Hierbei wird der Entzug des Wasserstoffs durch eine größere Reaktionsfläche erleichtert.

Weiterhin sind solche Kathoden zu verwenden, deren Oberfläche im Vergleich zur verwendeten Anode, stark vergrößert ist. Als Oberfläche wird hierbei die Grenzfläche von Elektrode zu Wasser bezeichnet, an der die elektrolytische Reaktion stattfinden kann. Eine rauhe, körnige Oberfläche bietet mehr Reaktionsfläche als eine blanke, glatte Oberfläche. Die Reaktionsfläche der Kathode ist dabei um den Faktor 10³ bis um den Faktor 10⁷ größer als diejenige der Anode. Dies wird beispielsweise durch eine größere Abmessung der Kathode im Vergleich zur Anode, aber auch durch eine veränderte Geometrie, wie z.B. eine gefaltete Oberfläche, eine gelochte Oberfläche oder ein Gitter erreicht. Vor allem kann eine große Oberfläche durch eine Erhöhung der Rauheit erreicht werden.

Als Elektroden kann eine Edelstahl- oder Niob-Elektrode verwendet werden. Ebenso können eine Eisenelektrode, eine Platinelektrode oder eine Elektrode aus platiniertem Titan verwendet werden. Weiterhin ist der Einsatz von Diamant-Elektroden bevorzugt. Dies sind Elektroden aus technischem Substrat, wie beispielsweise Niob, Tantal, Silicium, Graphit oder leitfähiger Keramik, die mit einer leitfähigen Diamantschicht beschichtet sind. Die Diamantschicht kann bordotiert sein. Derartige Elektroden sind die Diachem^{®}-Elektroden der CONDIAS GmbH.

Die elektrochemische Modifizierung des ultrareinen Wassers wird bevorzugt mit einer Elektrolysezelle ohne Membran oder Diaphragma durchgeführt. Bei der Elektrolyse wird ein Diaphragma oder eine Membran zwischen den beiden Elektroden in der Elektrolyselösung vorgesehen, wenn eine Reaktion der an den beiden Polen gebildeten Produkte vermieden werden muss. Erfindungsgemäß kann nach Anspruch 4 das ultrareine Wasser in einer Elektrolysezelle ohne Membran oder ohne Diaphragma elektrochemisch modifiziert werden. Der Vorteil ist hierbei, dass die Elektrolysezelle ohne Membran keine hohen Drücke des zu elektrolysierenden Wassers in den Elektrodenkammern benötigt und daher kein hoher Wartungsaufwand und deutlich weniger Verschleiß entstehen.

Die Elektroden können in der Elektrolysezelle ohne Membran oder Diaphragma in einem Abstand von 1 bis 4 mm angeordnet sein. Zur Umsetzung wird eine Spannung von 4,5 bis 48 V angelegt. Dabei ist mit einem weiteren Abstand der Elektroden eine höhere Spannung anzulegen und umgekehrt. Die Elektrolyse des ultrareinen Wassers wird für das erfindungsgemäße Wasser mit niedriger Energiezufuhr durchgeführt. In herkömmlichen Verfahren sind beispielsweise Spannungen von 50 bis 100 V üblich.

Im Gegensatz zu herkömmlichem elektrochemisch modifiziertem Wasser, das auch als "basisches Wasser" bezeichnet wird, weist das erfindungsgemäße Wasser außer H₂O-Molekülen, H₃O⁺-Ionen und OH⁻-Ionen in überschüssiger Konzentration nahezu keine anderen Ionen oder Moleküle oder anorganischen Bestanteile auf. Im Gegensatz zu herkömmlichem ultrareinem Wasser zeichnet es sich durch einen höheren pH-Wert aus. Dieser liegt bei 7,5 bis 9,5, bevorzugt bei 9,2.

Überraschend hat sich gezeigt, dass das erfindungsgemäße Wasser hervorragend dazu geeignet ist, hochreine Lösungen von Chloridsalzen herzustellen. Weiterhin ist es sehr gut dazu geeignet, Desinfektionsmittel auf der Basis von hypochloriger Säure herzustellen. Diese Desinfektionsmittel sind denjenigen aus dem Stand der Technik überlegen. Sie zeichnen sich, insbesondere aufgrund des pH-Werts, durch eine hohe Langzeitstabilität bzw. Haltbarkeit aus. Gleichzeitig und überraschend weisen sie in der Anwendung einen hohen Anteil an undissoziierter hypochloriger Säure im Kontakt mit Oberflächen wie auch mit menschlicher oder tierischer Haut auf. Dieser hohe Anteil an undissoziierter hypochloriger Säure ist für die Desinfektionswirkung der Mittel von ausschlaggebender Bedeutung. Wie oben dargestellt, besitzt das Hypochlorit-Anion nur eine verminderte Wirksamkeit aufgrund seiner negativen Ladung und der in wässriger Lösung angelagerten Hydrathülle. Die undissoziierte hypochlorige Säure ist im Gegensatz dazu in der Lage, sich aufgrund der fehlenden elektrischen Ladung gut anzulagern sowohl an zu desinfizierende Oberflächen als auch an die zu oxidierenden Mikroorganismen.

Weiterhin zeichnet sich das mit dem erfindungsgemäßen Wasser hergestellte Desinfektionsmittel durch eine hohe Langzeitwirkung aus, d.h. auf einer mit diesem Desinfektionsmittel behandelten Oberfläche ist auch noch nach einigen Stunden eine verminderte Keimbesiedelung, gemessen in KbE, festzustellen. Diese Langzeitwirkung hat den Vorteil, dass Oberflächen nicht so oft nachdesinfiziert werden müssen, wie es bei herkömmlichen Mitteln mit desinfizierender Wirkung der Fall wäre.

Gemäß der vorliegenden Erfindung kann ein erfindungsgemäßes, ultrareines elektrochemisch modifiziertes Wasser mit einem Verfahren nach den Ansprüchen 5 oder 6 hergestellt werden.

Als Ausgangsmaterial für das ultrareine, elektrochemisch modifizierte Wasser kann beispielsweise URW eingesetzt werden. Dieses URW weist eine elektrische Leitfähigkeit von höchstens 0,1 µS/cm auf, bevorzugt von 0,06 µS/cm, und einen TOC-Gehalt von höchstens 0,5 mg/l, bevorzugt von höchstens 0,05 mg/l, auf. URW mit dieser Spezifikation kann beispielsweise über Sigma Aldrich oder Merck bezogen werden. In einem ersten Schritt (1) wird dieses URW entgast. Dies kann durch ein beliebiges geeignetes Verfahren erfolgen, beispielsweise durch eine Vakuumentgasung mittels einer Wasserstrahlpumpe oder auch durch Membranentgasung, thermische Entgasung oder Ultraschallentgasung. Bei einer Ultraschallentgasung ist zumeist noch ein weiteres Verfahren anzuschließen, um eine möglichst vollständige Entfernung der Gase zu erreichen. Die Entgasung erfolgt vorteilhafterweise an einer vergrößerten Oberfläche. Hierbei wird der Entzug der Gase aus dem URW durch eine größere Reaktionsfläche erleichtert.

In einem weiteren Schritt (2) wird das entgaste URW in einer Durchfluss-Elektrolysezelle ohne Membran oder Diaphragma behandelt. Eine Elektrolyse nach dem Stand der Technik sieht das Anlegen einer Spannung an mindestens zwei Elektroden vor, an eine Anode und eine Kathode. Zwischen diesen Elektroden wird durch die angelegte Spannung Gleichstrom durch einen Elektrolyten geleitet. Im vorliegenden Verfahren wird statt eines Elektrolyten das entgaste URW verwendet.

Bei der Elektrolyse können verschiedene Parameter teils unabhängig und teils abhängig voneinander gewählt werden. Insgesamt ist es aber notwendig, die Parameter aufeinander abzustimmen. Es handelt sich dabei u.a. um das Volumen und die Geometrie der Elektrolysezelle, um den Volumenstrom der die Zelle durchströmenden Flüssigkeit, um die Geometrie der Elektroden, um das Material bzw. die Beschichtung der Elektroden, um die Anzahl und Polung der Elektroden, um den Abstand der Elektroden zueinander und zur Zelle, um die Größe der angelegten Spannung, um den Abstand der Elektroden voneinander und von der Zelle.

**Tabelle 2**

| **Veränderung** | **Auswirkung auf die Reaktion** |
|---|---|
| Erhöhung der Stromstärke | Erhöhte Elektrolyserate |
| Erhöhung der Spannung | Erhöhte Stromstärke und damit erhöhte Elektrolyserate |
| Erhöhung der Konzentration von Ionen im Elektrolyten | Erhöhte Stromstärke und damit erhöhte Elektrolyserate |
| Vergrößerung der Elektrodenoberflächen | Erhöhte Stromstärke und damit erhöhte Elektrolyserate |
| Verringerung des Abstands zwischen den Elektroden | Erhöhte Stromstärke und damit erhöhte Elektrolyserate |
| Ersatz einer Metall-Elektrode durch Inert-Elektrode | Elektrodenmaterial wird nicht mehr oxidiert/abgelöst |

Es können beispielsweise stabförmige Elektrolysezellen verwendet werden, deren Anode ein Hohlrohr umfasst, das mit dem Pluspol einer Spannungsquelle verbunden ist, und deren Kathode ebenfalls ein Hohlrohr umfasst, welches außerhalb der Anode koaxial angeordnet ist und mit dem Minuspol einer Spannungsquelle verbunden ist. Vorzugsweise werden zylinderförmige Elektrolysezellen verwendet, in deren Hohlraum scheibenförmige oder nahezu scheibenförmige Elektrolyseplatten senkrecht zur Achse angeordnet sind. Diese weisen beispielsweise ein Volumen von etwa 2 bis 4 l auf. Es können aber auch größere Zellen zum Einsatz kommen, wenn große Mengen an ultrareinem, elektrochemisch modifiziertem Wasser hergestellt werden sollen. Für kleinere Mengen, etwa im Labormaßstab, kann auch eine kleinere Elektrolysezelle mit einem Volumen von 0,5 bis 2 l verwendet werden.

Der Volumenstrom kann von etwa 10 l/h bis zu 500 l/h je nach Größe der Zelle und des Generators gewählt werden. Er ist insbesondere auch abhängig vom Volumen der Elektrolysezelle. Hierbei kann eine Zelle mit ca. 3 l Volumen mit einem Volumenstrom bis zu 500 l/h betrieben werden.

Die Elektrolyse wird bevorzugt an plattenförmigen Elektroden durchgeführt. Hierbei eignen sich als Anode beispielsweise Platten aus (beschichtetem) Titan, aus (hochfestem Kohlenstoff-) gebrannte Graphitplatten oder auch diamantbeschichtete Elektrolyseplatten. Titan kann beispielsweise mit Iridiumoxid oder Rhodium beschichtet sein. Die Diamantbeschichtung muss mit Bor dotiert sein. Die Beschichtung ist auf ein technisches Substrat, wie fluorierten Kunststoff, aufgetragen. Als Kathode eignen sich beispielsweise Platten aus Edelstahl, Niob, gebranntem Graphit oder auch diamantbeschichtete Elektrolyseplatten. Die Größe und die Gestalt der Elektrolyseplatten richtet sich wiederum nach den Abmessungen der Elektrolysezelle. Es können in einer Elektrolysezelle mehrere Platten enthalten sein. Die Anzahl der Platten wird hierbei sowohl durch die Größe und Gestalt, insbesondere die Dicke der Platten bestimmt, aber auch durch die Größe und Gestalt der Elektrolysezelle. Es sind mindestens 3 Platten vorzusehen. Für den Fall, dass beschichtete Platten verwendet werden, können mittig beidseitig beschichtete Platten verwendet werden, an den der Zelle zugewandten Seiten kann jeweils eine einseitig beschichtete Platte eingesetzt werden, wobei die Beschichtung zur nächsten Gegenelektrode hinweist. Besonders geeignet sind Elektrolysezellen, in denen sich 5 bis 11 Platten befinden.

Es ist in dem erfindungsgemäßen Verfahren von Vorteil, wenn die Kathodenoberfläche größer ist als die Anodenoberfläche. Dies kann einerseits durch eine größere Geometrie bzw. größere Abmessungen der Platten erfolgen. Andererseits kann durch die Rauhigkeit des jeweiligen Elektrodenmaterials oder der Elektrodenbeschichtung auch bei gleichen Abmessungen eine unterschiedlich große Oberfläche erreicht werden. Zur Vergrößerung der Oberfläche kann auch ein so genanntes Streckmetall beschichtet werden. Die Kathodenfläche ist dabei mindestens um den Faktor 10³ bis um den Faktor 10⁷ größer als die Anodenfläche.

Weiterhin ist die anzulegende Spannung in Abhängigkeit von Plattenmaterial bzw. - beschichtung, Plattenanzahl, Plattengröße und Plattengestalt zu wählen. Auch der verwendete Volumenstrom beeinflusst die anzulegende Spannung. Eine Gleichspannung ist für das erfindungsgemäße Verfahren erforderlich. So kann zum Beispiel bei einem Volumenstrom von 200 l/h das entgaste URW mit einer Spannung von 18 V beaufschlagt werden.

Nachfolgende Tabelle gibt Beispiele für die verschiedenen möglichen Parameter, die für die Elektrolyse des ultrareinen Wassers in der Durchfluss-Elektrolysezelle gewählt werden können:

**Tabelle 3**

| | | | | |
|---|---|---|---|---|
| **Volumen der Elektrolysezelle [ml]** | 500 | 1000 | 3000 - 3500 | 3500 - 5000 |
| **Volumenstrom [l/min]** | 0,3 | 0,6 | 2,5 | 4,0 |
| **Material Elektrode** | Diamant, bordotiert; Ir/Rh; Platinierter Edelstahl, Niob, Titan | Diamant, bordotiert; Ir/Rh; Platinierter Edelstahl, Niob, Titan | Diamant, bordotiert; platinierter Edelstahl, Niob, Titan | Diamant, bordotiert: platinierter Edelstahl, Niob, Titan |
| **Geometrie der Elektroden** | 4 × 6 cm Dicke 1,5 mm | 4 × 12 cm Dicke 1,5 mm | ∅ 12 cm Dicke 2 mm | ∅ 12 cm Dicke 2 mm |
| **Abstand der Elektroden [mm]** | 1,5 | 1,5 | 2,5 | 2,5 |
| **Angelegte Spannung [V]** | 7,5 -12 | 12-18 | 24 | 24-36 |
| **Stromstärke [Amp]** | 20 | 20 | 40 | 65 - 80 |
| **Technische Stromart** | DC | DC | DC | DC |

Zusätzlich wird in einem separaten Schritt (3) dem entgasten und elektrolysierten URW Sauerstoff zugeführt. Dies kann beispielsweise über die Zuführung von reinem gasförmigem O₂ erfolgen. Ebenso kann ein Gasgemisch mit O₂, wie beispielsweise Umgebungsluft, verwendet werden. In dem so mit Sauerstoff angereicherten Produkt wird dann das elektrolysierte Wasser mit dem O₂ zur Reaktion gebracht. Dies geschieht vorteilhafterweise an einer Oberfläche, bevorzugt an einer großen Oberfläche, über die das Produkt geführt wird. Hierbei kann etwa ein Filter, eine Silikatfasermembran oder ein anderer Festkörper mit poröser Oberfläche verwendet werden.

Wichtig ist, dass das so erhaltene Wasser anschließend in Schritt (4) nochmals entgast wird. Zur Entgasung können wiederum die vorgenannten Verfahren eingesetzt werden. Vorteilhaft ist eine Entgasung unter Vakuum. Diese kann auch an einer Silikatfasermembran erfolgen.

Alternativ kann in Schritt (3) die Umgebungsluft und/oder O₂ an einer Membran, bevorzugt einer Silikatfasermembran, mit dem nach Schritt (2) erhaltenen Wasser zur Reaktion gebracht werden. Hierbei wird das in Schritt (2) erhaltene Wasser an einer Seite der Membran, die Umgebungsluft und/oder O₂ an der anderen Seite der Membran geführt. Dies erfolgt beispielsweise durch Anlegen eines Vakuums. Vorteilhafterweise kommt die Umgebungsluft und/der O₂ nicht direkt mit dem Wasser in Berührung, sondern nur über die Membran. Der im Wasser enthaltene H2 wird somit an der einen Seite der Membran angereichert, dringt durch die Membran und kann an der anderen Seite der Membran mit dem dort zugeführten O₂ oder dem O₂ aus der zugeführten Umgebungsluft zu H₂O abreagieren. Anschließend kann eine weitere Entgasung gemäß Schritt (4) erfolgen.

Die Schritte (2) und (3) dieses Verfahrens können nun einfach oder mehrfach wiederholt werden. Hierzu wird das nach Schritt (3) erhaltene Produkt wieder durch eine Durchfluss-Elektrolysezelle geleitet. Es kann hier zurückgeführt werden und nochmals die erste Elektrolysezelle durchströmen, es kann aber auch eine zweite oder weitere Elektrolysezelle verwendet werden, die mit den gleichen oder unterschiedlichen Parametern im Vergleich zur ersten Zelle betrieben wird. Der Schritt (3) schließt sich jeweils an. Abschließend erfolgt eine Entgasung gemäß Schritt (4).

Die in der Tabelle 3 genannten Parameter sind dabei so gewählt, dass bereits nach einem Durchlauf von Schritt (1) bis Schritt (4) ein ultrareines, elektrochemisch modifiziertes Wasser mit einem pH-Wert von 7,5 bis 9,5 erhalten wird.

Weiterhin kann durch dem erfindungsgemäßen Verfahren vorausgehende Schritte ultrareines, elektrochemisch modifiziertes Wasser auch aus Trinkwasser oder Wasser von anderer Qualität, wie beispielsweise Quellwasser, Grundwasser oder Oberflächenwasser als Ausgangsmaterial hergestellt werden. Falls Wasser von anderer Qualität als URW als Ausgangsmaterial zur Herstellung des erfindungsgemäßen Wassers verwendet werden soll, so wird dieses Ausgangsmaterial entsprechend vorbehandelt. Dies ist beispielsweise in wasserarmen Gegenden oder in Gebieten mit schwierigem Zugang zu Wasser in Trinkwasserqualität oder aufgrund anderer natürlicher Gegebenheiten von Vorteil. Als Ausgangsmaterial kann dabei Oberflächenwasser, das z.B. aus Stauseen, Seen oder Flüssen stammt, oder ebenso zurückgehaltenes Regenwasser eingesetzt werden.

In Abhängigkeit von dem vorliegenden TOC-Gehalt im Ausgangsmaterial wird dieses zunächst in einer elektrolytischen Zelle behandelt. Dieser Schritt (a) ist immer dann vorzusehen, wenn der TOC-Gehalt bei einem Wert von mehr als 0,5 mg/l liegt. So ist in sauberem Quellwasser der TOC-Gehalt regelmäßig bei ca. 1-2 mg/l, in schwach belasteten Flüssen kann ein TOC-Gehalt von ca. 2-5 mg/l gemessen werden und in stark verschmutzten Gewässern sind beispielsweise Werte über 100 mg/l TOC zu finden.

Als elektrolytische Zelle eignet sich jede Zelle, die zur Abwasserbehandlung oder zur Wasserdesinfektion geeignet ist. Bevorzugt ist eine Durchfluss-Elektrolysezelle. Beispielsweise können Elektrolysezellen mit Bleielektroden oder mit bordotierten Diamantelektroden verwendet werden. Diese sind vom Fraunhofer Institut für Schicht- und Oberflächentechnik (IST) entwickelt worden. Bevorzugt sind beispielsweise die bei Condias GmbH oder Samro Technik AG erhältlichen Elektroden. Insbesondere ist es vorteilhaft, wenn die Anodenfläche größer ist als die Kathodenfläche. Hierbei ist beispielsweise eine Anodenfläche geeignet, die um den Faktor 10³ bis um den Faktor 10⁷ größer ist als die Kathodenfläche.

Ein anderes, geeignetes Verfahren zur Verminderung des TOC-Gehalts im Ausgangsmaterial ist die UV-Behandlung mit UV-C-Strahlung einer Wellenlänge von ca. 254 bis 185 nm. Ebenso ist bei moderaten TOC-Gehalten im Ausgangsmaterial eine Ultrafiltration möglich.

Mit dem entsprechenden Verfahren wird der TOC-Gehalt des Ausgangsmaterials auf einen Wert von höchstens 0,5 mg/l vermindert. Sofern das entsprechende Ausgangsmaterial einen TOC-Gehalt von 0,5 mg/l oder darunter aufweist, kann dieser Verfahrensschritt entfallen. Außerdem ist es bevorzugt für das Verfahren, wenn der TOC-Gehalt des Ausgangsmaterials auf einen Wert von 0,05 mg/l oder darunter gesenkt werden kann.

In einem anschließenden optionalen Schritt (b) wird das Ausgangsmaterial, dessen TOC-Gehalt entsprechend reduziert wurde, mit einem geeigneten Verfahren entgast. Dies kann durch Vakuumentgasung mittels einer Wasserstrahlpumpe oder auch durch Membranentgasung, thermische Entgasung oder Ultraschallentgasung erfolgen. Bei einer Ultraschallentgasung ist zumeist noch ein weiteres Verfahren anzuschließen, um eine möglichst vollständige Entfernung der Gase zu erreichen. Die Entgasung erfolgt vorteilhafterweise an einer vergrößerten Oberfläche.

In dem nach Schritt (a) oder (b) erhaltenen Wasser oder in dem Ausgangsmaterial mit einem TOC-Gehalt von höchstens 0,5 mg/l, wird in einem Schritt (c) der Gehalt an nicht organischen Bestandteilen reduziert. Dies erfolgt, sofern der Gehalt an Gasen und/oder an Schwermetallen und/oder Stickstoffverbindungen mehr als 0,05 mg/l beträgt. Die betreffenden Gase sind beispielsweise Cl₂, CO₂ und/oder N₂. Die Schwermetalle umfassen Antimon, Arsen, Blei, Cadmium, Chrom, Nickel, Quecksilber, Selen, Eisen und/oder Mangan. Die Entfernung der entsprechenden Bestandteile erfolgt beispielsweise durch Filtration durch oder Adsorption an Aktivkohle, Filtration durch Graphenoxid, reduziertes Graphenoxid oder Graphit oder ein anderes geeignetes Verfahren. Hierbei wird der Gehalt der vorstehend genannten Stoffe reduziert auf einen Wert von höchstens 0,05 mg/l.

Wenn das nach Schritt (a), (b) oder (c) erhaltene Wasser oder das Ausgangsmaterial, das bereits einen TOC-Gehalt von höchstens 0,5 mg/l und nicht organische Bestandteile von höchstens 0,05 mg/l und eine Leitfähigkeit von mehr als 30 µS/cm aufweist, wird Schritt (d) durchgeführt. Hierbei wird mittels üblichen gemischten Ionenaustauschern und/oder mittels getrennten Kationen- und Anionenaustauschern die Konzentrationen an Erdalkalimetall-Ionen, den Anionen Carbonat, Hydrogencarbonat, Sulfat, Chlorid, Nitrit, Nitrat und/oder Phosphat im nach Schritt (a), (b) oder (c) erhaltenen Wasser oder im Ausgangsmaterial gesenkt, so dass der Leitwert höchstens 30 µS/cm beträgt. Dies entspricht einem Härtegrad von 1 ° deutscher Härte.

Die Leitfähigkeit kann dabei mit einer Leitfähigkeitssonde, beispielsweise von HANNA Instruments, gemessen werden. Als Ionenaustauscher wird bevorzugt ein stark saurer Kationenaustauscher zusammen mit einem schwach basischen Anionenaustauscher und einem stark basischen Anionenaustauscher kombiniert.

Anschließend, oder falls das Ausgangsmaterial bereits einen Leitwert von höchstens 30 µS/cm aufweist, sowie einen TOC-Gehalt von höchstens 0,5 mg/l und nicht organische Bestandteile von höchstens 0,05 mg/l, wird in einem Schritt (e) der Gehalt an Ionen, vor allem Natriumionen und Chloridionen, mittels Umkehrosmose weiter reduziert. Aufgrund der bereits in den Schritten (a), (b), (c) und/oder (d) erfolgten Verminderung der Fremdstoffe im Wasser bzw. aufgrund der großen Reinheit des Ausgangsmaterials liegt der osmotische Druck bereits niedrig und die Umkehrosmose kann mit niedrigem Energieaufwand durchgeführt werden.

In einem anschließenden Schritt (f) wird der Gehalt an Ionen bzw. Restionen von Alkali, Erdalkali, Metall, Halogenid, Nitrat, Nitrit durch Elektrodeionisation weiter reduziert.

Das nach Schritt (f) erhaltene Wasser weist einen TOC-Gehalt von höchstens 0,5 mg/l auf und eine Leitfähigkeit von höchstens 0,1 µS/cm. Mit diesem Wasser kann nun das erfindungsgemäße Verfahren mit den Schritten (1), (2), (3) und (4) nach Anspruch 5 oder 6 durchgeführt werden.

Wird als Ausgangsmaterial Oberflächenwasser und/oder Brauchwasser verwendet, so ist es zweckmäßig, wenn im Ausgangsmaterial vorab die Abtrennung von gröberen und feineren Partikeln erfolgt. Gröbere Partikel haben einen mittleren Partikeldurchmesser von mehr als ca. 100 µm. Sie werden mittels Grobfiltration oder mittels eines anderen geeigneten Verfahrens abgetrennt. Die feineren Partikel, die je nach Ausgangsmaterial vorhanden sein können, weisen einen mittleren Partikeldurchmesser von ca. 100 µm bis 5 µm auf. Sie werden vorzugsweise mittels Feinfiltration oder mittels eines anderen geeigneten Verfahrens entfernt. Ebenso kann statt der Grob- und Feinfiltration eine Abscheidung mittels eines Hydrozyklons erfolgen.

Das erfindungsgemäße ultrareine, elektrochemisch modifizierte Wasser findet unter anderem Verwendung in einem Verfahren zur Herstellung einer hochreinen Chloridsalz-Lösung. Hierbei wird ein oder mehrere Salze der Chlorwasserstoffsäure mit einer Reinheit von mindestens 99,0 % in dem erfindungsgemäßen Wasser gelöst. Besonders bevorzugt werden Salze der Chlorwasserstoffsäure mit einer Reinheit von mindestens 99,5 % in dem erfindungsgemäßen Wasser gelöst.

Es wird eine konzentrierte Lösung hergestellt, die mindestens 20 Gew.-% Chloridsalz enthält. Dabei kann eine Sole hergestellt werden, in der das Chloridsalz bis zur Sättigung enthalten ist. Bei mehreren Chloridsalzen kann dabei die maximal mögliche Sättigungskonzentration abweichen und höher liegen als bei einem einzelnen Salz.

Die Löslichkeit eines Stoffes kann prinzipiell auf unterschiedliche Arten angegeben werden. Einerseits wird die Löslichkeit insbesondere im Hinblick auf die Sättigung als die vorliegende Masse an gelöster Substanz in einem Volumen des verwendeten Lösungsmittels angegeben. Die sich hieraus ergebende Löslichkeit in [g/l] wird beispielsweise in den Arzneibüchern genannt. Andererseits wird unter Löslichkeit in anderem Zusammenhang der Massenbruch betrachtet, der das Verhältnis von gelöster Substanzmasse zur Gesamtmasse der entstehenden Lösung, die aus Substanz und Lösungsmittel zusammengesetzt ist, besteht. Hier wird im Folgenden die Löslichkeit als Massenbruch in Gew.-% angegeben, die ein Maß für die Masse an gelöster Substanz in der Gesamtmasse an Lösung bezeichnet.

Als Salze der Chlorwasserstoffsäure können dabei Natriumchlorid, Kaliumchlorid, Magnesiumchlorid und/oder Calciumchlorid verwendet werden. Jederzeit kann auch eine Mischung von verschiedenen Chloridsalzen zur Anwendung kommen. Die Reinheit der verwendeten Chloridsalze beträgt mindestens 99,0 %. Dies entspricht zum Beispiel der Reinheitsklasse "purissimum" nach verschiedenen Arzneibüchern, wie dem Europäischen Arzneibuch Ph. Eur., dem Britischen Arzneibuch BP, dem Japanischen Arzneibuch JP oder dem US-amerikanischen Arzneibuch USP. Besonders geeignet sind beispielsweise NaCl puriss. p. a., NaCl optical grade 99,9 % oder NaCl Suprapur^{®}, 99,99 %.

Bei einer Temperatur von 20 °C beträgt die Sättigungskonzentration für NaCl 26,36 Gew.-%. Dies entspricht einer Löslichkeit von 358 g NaCl in einem Liter Wasser. Für KCl ergibt sich analog als maximale Konzentration bei Sättigung 25,76 Gew.-%, für MgCl₂ 35,15 Gew.-% und für CaCl₂ 45,53 Gew.-%.

Die hochreine Chloridsalz-Lösung kann insbesondere in einem Verfahren zur Herstellung einer Desinfektionslösung verwendet werden. Hierzu wird die vorbeschriebene Chloridsalz-Lösung auf eine Konzentration von etwa 0,025 bis 10 Gew.-% verdünnt.

Die Verdünnung erfolgt mit ultrareinem Wasser. Dieses Wasser ist nicht elektrochemisch aktiviert, sondern ist URW, wie es mit üblichen Reinstwasseranlagen oder Reinstwassersystemen hergestellt werden kann. Das URW kann beispielsweise mittels Elektrodeionisation hergestellt sein. Für die Elektrodeionisation wird hierbei enthärtetes, entsalztes Wasser verwendet. Die Enthärtung und die Entsalzung können dabei mit geeigneten Verfahren, wie beispielsweise den Durchfluss durch polymere Anionen- und Kationenaustauscher und eine Umkehrosmose unter Druck, erfolgen. Die elektrische Leitfähigkeit des verwendeten URW liegt bei höchstens 0,1 µS/cm bei 20 °C und der TOC-Gehalt bei höchstens 0,5 mg/l.

Es ist dabei von Vorteil, wenn das ultrareine Wasser, das zur Verdünnung der hochreinen Chloridsalz-Lösung verwendet wird, mit einem geeigneten Verfahren entgast wird, bevor es zur Verdünnung verwendet wird.

Weiterhin kann die hochreine Chloridsalz-Lösung auch auf eine Konzentration von etwa 1 Gew.-% bis etwa 6 Gew.-% mit URW verdünnt werden. Dies ist dann besonders geeignet, wenn eine Desinfektionslösung mit einer Konzentration an HClO (freiem Chlor bzw. Aktivchlor) von etwa 600 mg/l bis etwa 2500 mg/l hergestellt werden soll. Falls eine Desinfektionslösung mit einer Konzentration von 600 mg/l bis 1200 mg/l HClO benötigt wird, wird die Chloridsalz-Lösung bevorzugt auf eine Konzentration von 1 Gew.-% bis 3 Gew.-% verdünnt.

Anschließend an die Verdünnung der hochreinen Chloridsalz-Lösung, die unter Verwendung des erfindungsgemäßen Wassers hergestellt ist, wird diese verdünnte Lösung durch Elektrolyse in einer zyklischen Elektrolysezelle behandelt.

Bei dieser Elektrolyse bildet sich HClO (Aktivchlor), das eine desinfizierende Wirkung aufweist. Weiterhin bildet sich Cl₂ (Chlorgas), das mit dem vorhandenen Wasser unter Bildung von HCIO, H⁺ und Cl⁻ weiterreagiert. Besonders vorteilhaft ist es bei diesem Elektroylseverfahren, dass wenig störende Nebenprodukte, wie NaOH, Cl⁻, OCl₃⁻ oder OCl₄⁻ gebildet werden.

Bei der Elektrolyse in dem Verfahren nach Anspruch 9 wird bevorzugt eine zyklische Elektrolysezelle ohne Membran oder Diaphragma verwendet. Eine derartige Zelle zeichnet sich durch geringeren Wartungsbedarf und längere Haltbarkeit aus als eine Zelle, bei der Kathoden- und Anodenraum durch eine Membran oder ein Diaphragma getrennt sind.

Die zyklische Elektrolysezelle ist eine geschlossene Zelle, in die die verdünnte Chloridsalz-Lösung über eine Einlassleitung eingeleitet wird. Anschließend wird an in der Zelle befindliche Elektroden, Anode und Kathode, die in die verdünnte Lösung eintauchen, eine Spannung angelegt. Nach einer spezifischen Verweilzeit wird die elektrolysierte verdünnte Lösung über eine Auslassleitung aus der zyklischen Zelle abgeführt. Sie kann anschließend in einem Vorratsbehälter gesammelt werden.

In der zyklischen Elektrolysezelle befindet sich mindestens eine Anode und mindestens eine Kathode. Es ist von Vorteil, wenn die Anodenfläche aller Anoden zusammen größer ist als die Kathodenfläche aller Kathoden. Insbesondere wird eine Anodenfläche, die um den Faktor 10³ bis um den Faktor 10⁷ größer ist als die Kathodenfläche eingesetzt.

Bei der Elektrolyse werden die Parameter betreffend das Volumen und die Geometrie der Elektrolysezelle, die Verweilzeit der Lösung in der Zelle, die Geometrie der Elektroden, das Material bzw. die Beschichtung der Elektroden, die Anzahl und Polung der Elektroden, die Größe der angelegten Spannung, die technische Stromart (Gleichstrom (DC)), und der Abstand der Elektroden voneinander und von den Zellwänden aufeinander abgestimmt. Die Wahl der Parameter nimmt dabei insbesondere Einfluss auf die in der Desinfektionslösung entstehende Konzentration von HClO sowie das Redoxpotential für OCl⁻/Cl₂.

Beispielsweise eignen sich folgende Parameter:

**Tabelle 4**

| | | | | | |
|---|---|---|---|---|---|
| Volumen der Elektrolysezelle [ml] | 500 | 1000 | 3000 - 3500 | 3500 - 5000 | > 5000 |
| Verweilzeit [min] | 0,45 | 1,0 | 1,0 | 2,0 | 2,0 |
| Material Elektroden | Diamant, bor-dotiert; Edelstahl, Niob | Diamant, bor-dotiert; Edelstahl, Niob | Diamant, bor-dotiert; Edelstahl, Niob | Diamant, bor-dotiert; Edelstahl, Niob | Diamant, bor-dotiert; Edelstahl, Niob |

| Geometrie der Elektroden | 4 × 6 cm, Stabelektrode | Stabelektrode | ∅ 12 cm; Dicke 1,5 - 2,0 mm | ∅ 12 cm; Dicke 1,5 - 2,0 mm | 8 × 10 cm |
|---|---|---|---|---|---|
| Abstand der Elektroden [mm] | 1,0 | 2,5 | 2,5 - 3,0 | 2,5 - 4,0 | 2,5 - 4,0 |
| Angelegte Spannung [V] | 5,5 - 7,5 | 7,5-10 | 10-15 | 20-45 | > 24 |
| Stromstärke [Amp] | < 40 | < 40 | 40 - 65 | 65 - 120 | > 40 |
| Technische Stromart | DC | DC | DC | DC | DC |

Die genannten Parameter können insbesondere so gewählt werden, dass die Desinfektionslösung nach der entsprechenden Verweilzeit in der Zelle ein Redoxpotential für OCl⁻/Cl₂ von + 700 bis + 950 mV aufweist. Vorteilhafterweise werden die Parameter so gewählt, dass die Desinfektionslösung nach der Verweilzeit in der Zelle ein ORP von + 800 bis + 900 mV, insbesondere von + 850 mV aufweist.

Bevorzugt werden die genannten Parameter so gewählt, dass die Desinfektionslösung eine Konzentration von 600 bis 5000 mg/l CIO⁻-Ionen aufweist. Insbesondere sind Desinfektionsmittellösungen bevorzugt, die eine Konzentration an CIO⁻-Ionen von 600 mg/l, von 1200 mg/l, von 1800 mg/l oder von 2500 mg/l enthalten. Außerdem können die Parameter auch so gewählt werden, dass eine hochwirksame Desinfektionslösung mit 4000 bis 5000 mg/l OCl⁻entsteht. Hierzu wird beispielsweise die Elektrolyse einer auf 5 Gew.-% verdünnten hochreinen Chloridsalz-Lösung in einer Elektrolysezelle mit einem Volumen von 1000 ml durchgeführt. Hierzu wird eine Gleichstrom-Spannung von 5 V an Edelstahl-Elektroden angelegt, wobei die Kathodenfläche um den Faktor 10⁴ größer ist als die Anodenfläche. Die Elektroden sind in einem Abstand von 2 mm zueinander angeordnet. Hierbei fließt ein Strom von 25 Amp. und die Lösung wird für 0,45 min in der Elektrolysezelle behandelt. So erhält man beispielsweise eine Desinfektionslösung mit einer Konzentration von 1200 mg/l ClO⁻-Ionen und einem Oxidationspotential von 800 mV. Die vorliegende Konzentration an OCl⁻ kann im Verlauf der Verweilzeit mittels iodometrischer Titration oder iodometrischer Rücktitration bestimmt werden. Das Redoxpotential kann mittels bekannter Verfahren gemessen werden, beispielsweise mithilfe einer Normalwasserstoffelektrode oder auch mithilfe einer Silber-Silberchlorid-Elektrode.

Durch die Verdünnung der hochreinen Chloridsalz-Lösung auf eine Konzentration von 0,025 bis 10 Gew.-% und die Behandlung dieser verdünnten Lösung mit der Elektrolyse wird die Lösung zu Desinfektionslösung umgesetzt.

In einer besonderen Ausführungsform des erfindungsgemäßen Verfahrens wird die erhaltene Desinfektionslösung nach der Elektrolyse in der zyklischen Elektrolysezelle durch ein geeignetes Verfahren entgast. Hier eignen sich die bereits beschriebenen Verfahren der Vakuumentgasung mittels einer Wasserstrahlpumpe oder auch der Membranentgasung, der thermischen Entgasung oder der Ultraschallentgasung. Beispielsweise kann die Entgasung an einer vergrößerten Oberfläche stattfinden.

Die beschriebene Desinfektionslösung ist insbesondere hinsichtlich ihrer Langzeitstabilität, aber auch in Bezug auf das desinfizierende Oxidationspotential und die Reproduzierbarkeit der Desinfektionswirkung den aus dem Stand der Technik bekannten Desinfektionslösungen überlegen. Sie weist auch nach einer längeren Lagerung noch ein Oxidationspotential von + 700 bis + 950 mV auf. In jedem Fall weist sie nach längerer Lagerung noch ein Oxidationspotential von + 700 bis + 850 mV auf.

In dem erfindungsgemäßen Verfahren zur Herstellung einer Desinfektionslösung wird eine Elektrolysezelle ohne Membran und/oder Diaphragma eingesetzt. Diese Elektrolysezellen haben nicht einen Anodenraum und einen Kathodenraum, die durch eine Membran oder durch ein Diaphragma voneinander abgetrennt sind. In dem erfindungsgemäßen Verfahren wird eine Einzelzelle verwendet, bei der Anode und Kathode in einem Raum mit der zu elektrolysierenden Lösung in Kontakt stehen. Dies hat den Vorteil, dass das Verfahren ohne hohe Drücke auskommt. Aufgrund dieser Drücke, die bislang bei der Membranzell- bzw. Diaphragma-Elektrolyse aufgewendet werden mussten, war das bisherige Verfahren teuer und wartungsintensiv. Weiterhin erzeugt die Membranzell- bzw. Diaphragma-Elektrolyse in den getrennten Kammern zwei unterschiedliche Lösungen mit auf Anodenseite sehr niedrigem pH-Wert und auf Kathodenseite sehr hohem pH-Wert. Diese anodische Lösung ist hoch korrosiv, verliert innerhalb kurzer Zeit das ORP und die Konzentration an OCl⁻ verringert sich. Durch die Korrosivität und die Instabilität sind die gewonnenen Lösungen nur bedingt zur Desinfektion einzusetzen, bei der eine gleichbleibende und gesicherte desinfizierende Wirksamkeit vorausgesetzt werden muss, um validierbare Ergebnisse zu erzielen.

Überraschend sind die mit dem erfindungsgemäßen Verfahren erhaltenen Desinfektionslösungen trotz hoher Lager- bzw. Langzeitstabilität in der Lage, bei Kontakt mit der zu desinfizierenden Oberfläche oder mit den Händen oder der Haut eine optimale desinfizierende Wirkung zu entfalten. Dies wird durch einen optimalen pH Bereich für die mikrobiologische Wirksamkeit erreicht.

Die aufgrund der Behandlung in der zyklischen Elektrolysezelle erhaltene Desinfektionslösung kann anschließend weiter aufbereitet werden, indem die Desinfektionslösung mindestens einfach, bevorzugt mehrfach durch eine Durchfluss-Elektrolysezelle geführt wird. Bevorzugt wird die Desinfektionslösung in der Zelle mit folgenden Parametern behandelt:

**Tabelle 5**

| | |
|---|---|
| Volumen der Elektrolysezelle [ml] | 1000 |
| Volumenstrom [l/min] | 5 |
| Material Elektroden | Niob oder Ir/Rh, Niob/Edelstahl |
| Geometrie der Elektroden | rund |
| Abstand der Elektroden | < 2,5mm |
| Angelegte Spannung [V] | ab 24 |
| Stromstärke [Amp] | bis 40 |
| Technische Stromart | DC |

Hierbei wird das noch in der Desinfektionslösung gelöste Chloridsalz weiter umgesetzt. Bei dieser Aufbereitung kann die Desinfektionslösung mit URW auf eine gewünschte Konzentration von 500 mg/l bis zu 2500 mg/l verdünnt werden. So kann beispielsweise eine Konzentration von 600 mg/l, 1200 mg/l, 1800 mg/l oder 2500 mg/l OCl⁻ entsprechend den Vorgaben aus der Mikrobiologie verwendet werden.

Die nach dem beschriebenen Verfahren hergestellte Desinfektionslösung oder die durch die Aufbereitung verdünnte Desinfektionslösung kann vorteilhafterweise mit einem Zusatz von Natriumhydrogencarbonat in einer Konzentration von 0,1 g/l bis 0,5 g/l versetzt werden.

Weiterhin kann die Desinfektionslösung oder die durch Aufbereitung verdünnte Desinfektionslösung zusätzlich mit Benzalkoniumchlorid und/oder anderen quartären Ammoniumverbindungen versetzt werden. Hierbei umfasst Benzalkoniumchlorid alle diejenigen Alkylbenzyldimethylammoniumchloride, deren Alkylreste aus C8- bis C₁₈-Ketten bestehen. Weiterhin können auch andere quartäre Ammoniumverbindungen verwendet werden. Hier sind beispielsweise eine oder mehrere Substanzen aus der Gruppe enthaltend Cetylalkoniumchlorid, Cetylpyridiniumchlorid, Cetyltrimethylammoniumbromid, Denatoniumbenzoat, Dimethyldioctadecylammoniumchlorid, Tetrabutylammoniumhydroxid (TBAH), Paraquat, Polyquaternium-7, Tetradecyltrimethylammoniumoxalat, 3-Chlor-2-hydroxypropyl-N,N,N-trimethylammoniumchlorid, Benzyltrimethylammoniumchlorid geeignet, um der Desinfektionslösung zugesetzt zu werden.

So kann die desinfizierende Wirkung der Lösung zusätzlich erhöht werden. Außerdem verbessert dieser Zusatz die oberflächenaktiven Eigenschaften der Desinfektionslösung. Eine Desinfektionslösung mit Benzalkoniumchlorid und/oder anderen quartären Ammoniumverbindungen weist eine verbesserte Benetzung der mit dieser Lösung behandelten Oberflächen auf. Dies ist für die Desinfektionswirkung von Vorteil.

Die Benzalkoniumchloride werden hierbei in einer Konzentration von etwa 0,1 g/l bis etwa 2,5 g/l verwendet. Bevorzugt ist eine Konzentration von 0,5 g/l bis 1,5 g/l. Die anderen quartären Ammoniumverbindungen werden bevorzugt in Konzentrationen von 0,1 g/l bis 1 g/l, teilweise bis zu 10 g/l eingesetzt.

Die Desinfektionslösung ist insbesondere geeignet zur Desinfektion mittels Verneblern, Sprühern oder Zerstäubern. Hierbei ist die Händedesinfektion, Flächendesinfektion, Desinfektion im veterinärmedizinischen Bereich, aerosolgetragene Oberflächendesinfektion, Geruchsneutralisation oder Raumlufthygienisierung möglich. Zur aerosolgetragenen Oberflächendesinfektion oder zur Raumlufthygienisierung wird die Desinfektionslösung durch einen Vernebler oder eine Sprühdüse feinneblig versprüht. Zur besseren Verteilung kann ein Ventilator oder ein Belüftungssystem eingesetzt werden. Aufgrund der nicht korrodierenden Eigenschaft greift die Desinfektionslösung auch Vernebelungs- und Verteilungsvorrichtungen nicht an. Durch den niedrigen Gehalt an HOCl und NaCl sind die erfindungsgemäßen Desinfektionslösungen besonders zur Aerosoldesinfektion von Oberflächen aber auch zur Luftbefeuchtung, z.B. im Rahmen der Hygienisierung der Raumluft oder zur Geruchsneutralisation, geeignet.

Bevorzugt wird die Desinfektionslösung zur Oberflächendesinfektion, Raumlufthygienisierung und Geruchsneutralisation eingesetzt.

Das in den Ansprüchen 5 und 6 beschriebene Verfahren zur Herstellung von ultrareinem, elektrochemisch modifiziertem Wasser kann in Kombination mit dem in den Ansprüchen 7 und 8 beschriebenen Verfahren zur Herstellung einer hochreinen Chloridsalz-Lösung und mit dem in einem der Ansprüche 9 bis 11 beschriebenen Verfahren zur Herstellung einer Desinfektionslösung in unmittelbarer Nähe zum Einsatzort verwendet werden.

Hierzu wird vor Ort verfügbares Wasser und vor Ort verfügbarer Strom verwendet. So kann beispielsweise die nachbeschriebene Anordnung zur Herstellung einer Desinfektionslösung an die vor Ort verfügbare Wasserversorgung, insbesondere an die Trinkwasserversorgung, und Stromversorgung angeschlossen sein.

Die Anordnung weist unterschiedliche Elektrolysezellen sowie Vorrichtungen für lonenaustausch, Umkehrosmose und Elektrodeionisation des Wassers auf.

Das vor Ort entnommene Wasser durchströmt zunächst eine Durchfluss-Elektrolysezelle, die den TOC-Gehalt auf einen Wert von höchstens 0,5 mg/l reduziert. Anschließend wird das Wasser an Ionenaustauschern enthärtet und in einem Umkehrosmoseverfahren und einem anschließenden Elektrodeionisationsverfahren entsalzt. Das erhaltene URW wird hierauf mit einem geeigneten Verfahren entgast. Durch den Durchfluss durch eine zweite Durchfluss-Elektrolysezelle wird das entgaste URW nochmals mit einer Elektrolyse behandelt. Die einzelnen Parameter dieser Durchfluss-Elektrolysezelle sind entsprechend dem erfindungsgemäßen Verfahren gewählt. Nach Zugabe von Umgebungsluft oder O₂ wird das erhaltene Wasser über eine vergrößerte Oberfläche geleitet und anschließend nochmals entgast. In einer Vorratskammer befindet sich hochreines Chloridsalz. Dieses wird dem ultrareinen, elektrochemisch modifizierten Wasser zudosiert, sodass sich eine hochreine Lösung bildet. Diese Lösung wird mit URW, das optional entgast ist, verdünnt auf eine Konzentration von etwa 1 bis 5 Gew.-% und anschließend in einer zyklischen Elektrolysezelle für eine bestimmte Verweildauer behandelt. Die einzelnen Parameter dieser zyklischen Elektrolysezelle sind entsprechend dem erfindungsgemäßen Verfahren gewählt. Im Anschluss wird die Desinfektionslösung in einem Kreislauf durch eine Durchfluss-Elektrolysezelle geleitet und mit URW auf eine gewünschte Konzentration verdünnt. Sobald die Desinfektionslösung die gewünschte Konzentration aufweist, wird sie in eine Vorratskammer geleitet. Aus dieser Vorratskammer kann die Desinfektionslösung entnommen werden.

Hierbei ist es insbesondere von Vorteil, dass die Desinfektionslösung ein gleichbleibendes, reproduzierbares und validierbares Desinfektionsergebnis liefert. Insbesondere hat die erfindungsgemäße Desinfektionslösung einen niedrigen Chloridsalz-Gehalt. Sie ist daher besonders geeignet für den Einsatz auf Oberflächen und/oder Geräten, die korrosionsanfällig sind.

Weiterhin wird der Transport von Desinfektionslösung vermieden, da Wasser und Strom vor Ort entnommen werden. Nur das Chloridsalz muss transportiert werden. Alternativ könnte die hochreine Chloridsalz-Lösung transportiert werden und die Herstellung der Deinfektionslösung vor Ort würde mit der zyklischen Elektrolyse-Zelle starten.

Aufgrund des gleichbleibenden, reproduzierbaren und validierbaren Desinfektionsergebnisses kann in dem erfindungsgemäßen Verfahren eine niedrige Konzentration von 600 bis 2500 mg/l HClO bzw. Aktivchlor eingestellt werden. Durch die niedrigen Konzentrationen an HClO wird eine hautschonende Desinfektion erreicht.

Weitere Merkmale und Vorteile der Erfindung ergeben sich aufgrund der nachfolgenden Beschreibung von bevorzugten Ausführungsbeispielen, wobei diese keine Einschränkung des Schutzbereichs darstellen.

Es zeigen:
- Figur 3:: Eine Tonscherbe, bewachsen mit einem Konglomerat aus Pelz- und Rotalgen;
- Figur 4:: Die Tonscherbe von Figur 3 nach Entnahme aus dem Wasser, nachdem sie 120 Minuten in eine erfindungsgemäße Desinfektionslösung getaucht hat, sowie nachdem sie 15 Stunden in eine erfindungsgemäße Desinfektionslösung getaucht hat;
- Figur 5:: Eine Tonscherbe, sowie Aquarienzubehör (Lufthebefilter) eingetaucht in Desinfektionslösung nach 5 Minuten, 1 Stunde, 12 Stunden, sowie die Tonscherbe nach der Entnahme aus der Desinfektionslösung nach 12 Stunden und einer Spülung mit Wasser;
- Figur 6:: Ein Whirlpool und dessen Schlauchsystem, links vor und rechts nach einer 20-stündigen Behandlung mit der erfindungsgemäßen Desinfektionslösung;

1. Herstellung der Desinfektionslösung:
Zur Herstellung des erfindungsgemäßen Wassers werden zunächst 50 l Trinkwasser durch eine elektrolytische Zelle mit einem Volumen von 3 l und mit fünf Elektroden, wobei die Anoden Diamant-Elektroden und die Kathoden Edelstahlelektroden sind, bei einer angelegten Spannung von 5 V und einem Volumenstrom von 5 l/min durchgeleitet. Das so von organischen Verunreinigungen befreite Wasser wird mit einer Wasserstrahlpumpe entgast. Anschließend wird das so behandelte Wasser durch einen in die Leitung integrierten, zylindrischen Behälter geführt, der mit Aktivkohle als Festbett-Absorber gefüllt ist (Aktivkohlefilter der Fa. Aquaplan). So werden nicht-organische Bestandteile entzogen. Das so aufbereitete Wasser wird durch einen Gemischtbett-Ionenaustauscher der Fa. Aquaplan geleitet, um vor der nachfolgenden Umkehrosmose die noch verbliebenen Fremdionen zu entfernen. Nach der Umkehrosmose werden 30 l Wasser erhalten, die durch eine Anlage zur Elektrodeionisation geführt werden. Anschließend erfolgt eine Entgasung mit einer Wasserstrahlpumpe.

Das ultrareine, entgaste Wasser wird nun durch eine Durchfluss-Elektrolysezelle geleitet. In dieser Zelle sind die Elektroden auf Anodenseite diamantdotiert und auf Kathodenseite aus Edelstahl. Es werden 5 V angelegt und die Durchflussrate bei 2 l/min gehalten. Anschließend wird über einen Hahn im Leitungssystem O₂ zugeführt. Das elektrolysierte, mit O₂ angereicherte Wasser wird über eine Silikatfasermembran geführt und anschließend mittels Membran-Vakuumentgasung entgast.

In dem erhaltenen Wasser werden 280 g/l hochreines NaCl (Sigma-Aldrich, CAS 7647-14-5) gelöst. Diese Chloridsalz-Lösung eignet sich zur Lagerung.

Zur Herstellung einer Desinfektionslösung wird eine Menge von 0,5 l der Chloridsalz-Lösung mit ca. 4 l Ultrareinstwasser verdünnt. Diese ca. 3%-ige Lösung wird in einer zyklischen Elektrolysezelle mit Edelstahl-Niob-Kathoden und bor-dotierten Diamant-Anoden mit einer Spannung von 5 V für mindestens 1 min elektrolysiert. Die Fläche der Anoden ist durch die DiamantBeschichtung um den Faktor 10⁴ größer als diejenige der Kathoden. Die Geometrie der Elektroden ist dem Gehäuse der Elektrolysezelle angepasst. Der Abstand zwischen den Elektroden beträgt 1,5 mm. Nach 1 min ist so viel Chlorid umgesetzt, dass die Desinfektionslösung eine Konzentration an OCl⁻ -Ionen von 2000 mg/l und ein Redoxpotential von 800 mV besitzt.

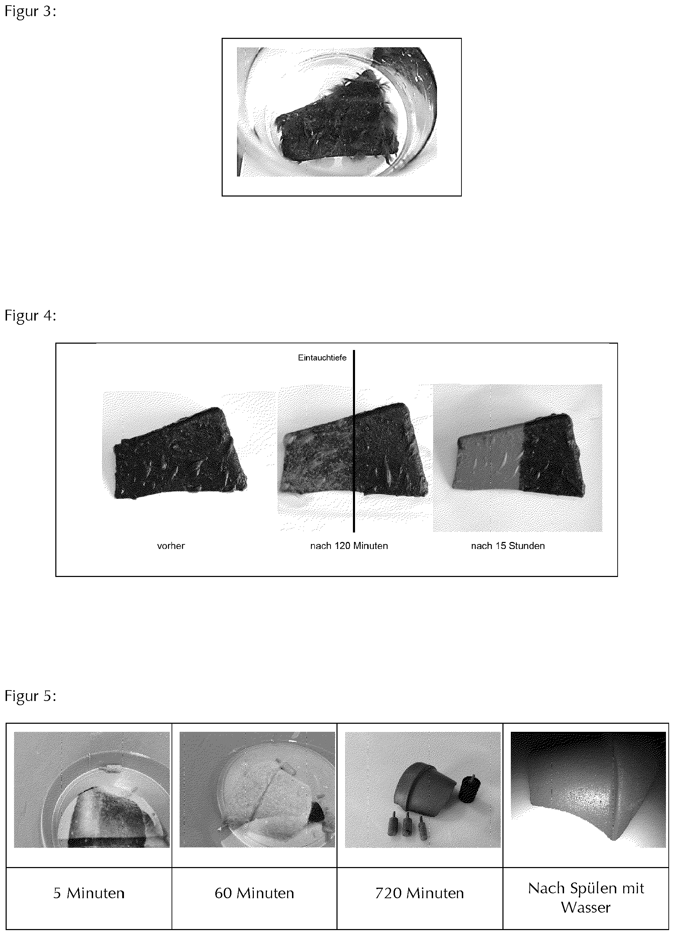

2. Beseitigung von Algenbewuchs auf Alltagsgegenständen:
Zur Untersuchung der desinfizierenden Eigenschaften und der Wirkung gegen Biofilme wird eine mit Algen bewachsene Tonscherbe gemäß Figur 3 in diese Desinfektionslösung eingetaucht.

Nach 120 min und nach 15 h wird die Tonscherbe aus der Lösung entnommen und inspiziert. Hierbei zeigt sich in Figur 4, dass die erfindungsgemäße Lösung in der Lage ist, den Biofilm auf Gebrauchsgegenständen komplett zu entfernen.

3. Wirkungseintritt:
Zur Beurteilung des Wirkungseintritts werden eine mit Algen bewachsene Tonscherbe und weiteres Aquarienzubehör (Lufthebefilter) in die Desinfektionslösung getaucht. Die Gegenstände werden nach 5 Minuten, nach 1 Stunde und nach 12 Stunden gemäß Figur 5 beurteilt.

Es ist zu erkennen, dass ein Wirkungseintritt bereits nach 5 min erfolgt.

4. Behandlung von Schlauchsystemen:
20 l der Desinfektionslösung werden in das Schlauchsystem eines Whirlpools eingebracht. Nach 12 h Verweilzeit wird das behandelte Schlauchsystem untersucht.

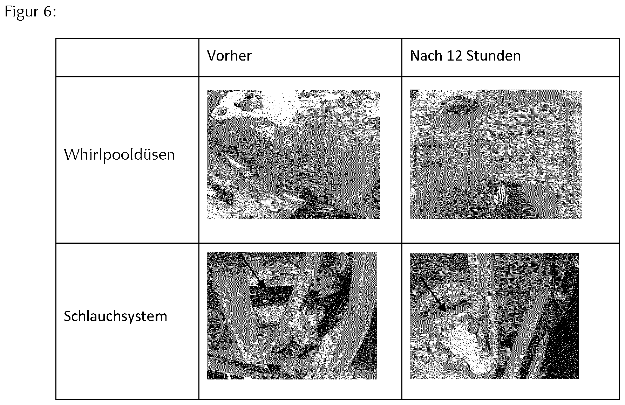

Es zeigt sich in den Abbildungen gemäß Figur 6, dass nach 12 Stunden die Biomasse im Schlauchsystem mit der Desinfektionslösung entfernt werden kann. Die entfernte Biomasse entspricht dabei etwa einer Masse von 1,8 kg. Der Bewuchs ist an den beiden horizontal in der Bildmitte verlaufenden Schläuchen sichtbar.

Die Abbildungen in Figur 6 zeigen, dass eine Beseitigung von Algen und Biofilmen auch in geschlossenen Schlauchsystemen möglich ist. Die gekennzeichneten Schläuche (Pfeil) sind nach 12 Stunden komplett frei von Algenbewuchs und Biofilm.

Insgesamt zeigen die Versuche 1. bis 4., dass die erfindungsgemäße Desinfektionslösung eine sehr gute Wirksamkeit bereits bei einer Konzentration von 2000 mg/l HOCl aufweist. Die Wirksamkeit ist etwa um das 80-fache größer als diejenige einer bekannten Natriumhypochloritlösung in gleicher Konzentration.

## Patentansprüche

1. Ultrareines Wasser mit einer elektrischen Leitfähigkeit von kleiner als 0,1 µS/cm, das im Wesentlichen frei von organischen Bestandteilen und von Gasen ist, und in dem durch autoprotolytische Vorgänge OH⁻-Ionen und H₃O⁺-Ionen ausgebildet werden,
**dadurch gekennzeichnet, dass** das ultrareine Wasser einen OH⁻-Überschuss und einen pH-Wert von 7,5 bis 9,5 aufweist.

2. Ultrareines Wasser nach Anspruch 1, wobei der OH⁻-Überschuss durch eine elektrochemische Modifizierung erhalten wird.

3. Ultrareines Wasser nach Anspruch 2, wobei die elektrochemische Modifizierung eine Elektrolyse des ultrareinen Wassers durch die Durchleitung durch eine Elektrolysezelle und die Entfernung des bei der Elektrolyse entstandenen Wasserstoffs (H2) umfasst, wobei die Elektrolysezelle mindestens eine Kathodenfläche und mindestens eine Anodenfläche aufweist, wobei die Kathodenfläche um den Faktor 10³ bis um den Faktor 10⁷ größer ist als die Anodenfläche.

4. Ultrareines Wasser nach Anspruch 2 oder 3, wobei die elektrochemische Modifizierung mit einer Elektrolysezelle ohne Membran oder Diaphragma und mit einem Abstand der Elektroden von 1 bis 4 mm und mit einer Spannung von 4,5 bis 48 V durchgeführt wird.

5. Verfahren zur Herstellung von ultrareinem, elektrochemisch modifiziertem Wasser, das einen OH⁻-Überschuss-und einen pH-Wert von 7,5 bis 9,5 aufweist, wobei als Ausgangsmaterial Wasser mit einem TOC-Gehalt von höchstens 0,5 mg/l und einer elektrischen Leitfähigkeit von höchstens 0,1 µS/cm verwendet wird, wobei
(1) das Ausgangsmaterial entgast wird,
(2) das in Schritt (1) erhaltene Wasser in einer Durchfluss-Elektrolysezelle ohne Membran oder Diaphragma mit einer DC-Spannung beaufschlagt wird,
(3) zu dem in Schritt (2) erhaltenen Wasser Umgebungsluft und/oder O₂ zugeführt wird und das Wasser mit der Umgebungsluft und/oder dem O₂ an einer Oberfläche zur Reaktion gebracht wird,
(4) anschließend das in Schritt (3) erhaltene Wasser entgast wird.

6. Verfahren zur Herstellung von ultrareinem, elektrochemisch modifiziertem Wasser nach Anspruch 5, wobei die Durchfluss-Elektrolysezelle mindestens eine Kathodenfläche und mindestens eine Anodenfläche aufweist, wobei die Kathodenfläche um den Faktor 10³ bis um den Faktor 10⁷ größer ist als die Anodenfläche.

7. Verfahren zur Herstellung einer hochreinen Chloridsalz-Lösung, wobei ein oder mehrere Salze der Chlorwasserstoffsäure mit einer Reinheit von mindestens 99,0% in dem ultrareinen, elektrochemisch modifizierten Wasser nach einem der Ansprüche 1 bis 4 oder hergestellt nach einem Verfahren der Ansprüche 5 oder 6 zu einer Konzentration von 20 Gew.-% bis zur Sättigungskonzentration gelöst werden.

8. Verfahren nach Anspruch 7, wobei Natriumchlorid mit einer Reinheit von mindestens 99,9 % in dem ultrareinen, elektrochemisch modifizierten Wasser zu einer Konzentration von 25,0 bis 26,36 Gew.-% bei 20 °C gelöst wird.

9. Verfahren zur Herstellung einer Desinfektionslösung, wobei die hochreine Chloridsalz-Lösung nach einem der Ansprüche 7 oder 8 mit ultrareinem Wasser auf eine Konzentration von 0,025 bis 10 Gew.-% Chloridsalz verdünnt wird und die verdünnte Lösung durch Elektrolyse in einer zyklischen Elektrolysezelle behandelt wird.

10. Verfahren zur Herstellung einer Desinfektionslösung nach Anspruch 9, wobei bei der Elektrolyse unter anderem OCl⁻ und/oder Cl₂ gebildet wird und die Desinfektionslösung ein Oxidationspotential für OCl⁻/Cl₂ von + 700 mV bis + 950 mV aufweist.

11. Verfahren nach einem der Ansprüche 9 oder 10 zur Herstellung einer Desinfektionslösung, wobei die Desinfektionslösung eine Konzentration von OCl⁻ -Ionen von 600 bis 5000 mg/l aufweist.
